**Europäisches Patentamt**

**European Patent Office**

**Office européen des brevets**

(19)

(11) **EP 1 600 806 A2**

(12) **EUROPEAN PATENT APPLICATION**

(43) Date of publication:
**30.11.2005 Bulletin 2005/48**

(51) Int Cl.7: **G02F 1/01**

(21) Application number: **05076910.8**

(22) Date of filing: **01.08.1996**

| | |
|---|---|
| (84) Designated Contracting States:<br>**AT BE CH DE DK ES FI FR GB GR IE IT LI LU MC NL PT SE**<br>Designated Extension States:<br>**AL LT LV SI** | (72) Inventors:<br>• **Yao, Xiaotian Steve**<br>  **Diamond Bar, California 91765 (US)**<br>• **Maleki, Lutfollah**<br>  **San Marino, California 91108 (US)** |
| (30) Priority: **01.08.1995 US 510064**<br>        **23.01.1996 US 10472** | (74) Representative: **Charig, Raymond Julian**<br>**Eric Potter Clarkson,**<br>**Park View House,**<br>**58 The Ropewalk**<br>**Nottingham NG1 5DD (GB)** |
| (62) Document number(s) of the earlier application(s) in accordance with Art. 76 EPC:<br>**96928077.5 / 0 842 571** | |
| (71) Applicant: **CALIFORNIA INSTITUTE OF TECHNOLOGY**<br>**Pasadena California 91125 (US)** | Remarks:<br>This application was filed on 19 - 08 - 2005 as a divisional application to the application mentioned under INID code 62. |

(54) **Novel opto-electronic oscillators**

(57)     A versatile photonic radio frequency (RF) oscillator employs a single optical feedback loop, or multiple feedback loops of different delay times and including at least one optical feedback loop, to generate RF signals with ultra-low phase noise, narrow spectral linewidth, and a continuous wide tuning range of high resolution. Specifically, an electro-optical modulator and a long optical fiber loop are implemented in one dual-loop system.

In addition, a light beam from a light source can be directly modulated by using a single optical feedback signal, or a plurality of feedback signals from multiple feedback loops, to alter the electrical control signal to the light source. Furthermore, the disclosed system supports both electrical and optical RF outputs. External optical injection and electrical injection can be implemented.

FIG.1A

EP 1 600 806 A2

**Description**

The invention described herein was made in the performance of work under a NASA contract, and is subject to the provisions of Public Law 96-517 (35 USC 202) in which the Contractor has elected to retain title.

Field of Invention

The present invention relates to radio frequency and microwave oscillators and specifically to a photonic microwave oscillator based on a single optical feedback loop or multiple electro-optical feedback loops.

Background and Summary of the invention

Radio frequency (RF) oscillators are widely used for generating, tracking, cleaning, amplifying, and distributing RF carriers. In particular, voltage-controlled RF oscillators with phase-locked loops are used for clock recovery, carrier recovery, signal modulation and demodulation, and frequency synthesizing. RF oscillators are important to communication, broadcasting, and receiving systems in the radio frequency spectral range. Conventional RF oscillators include electronic oscillators using solid-state electronic components.

Many conventional devices, including most conventional computers and such, transfer information by flow of electrons. Photonic technology, in contrast, uses photons to transfer information. Photonic technology offers a number of advantages including: low loss, light weight, high carrier frequency, high security, remote capability, and immunity to electromagnetic interference. Photonic devices and systems have been widely used in a variety of applications in recent years.

For example, rapid advances in photonic fields including diode laser systems, photodetectors, electro-optical light modulators, and optical fiber systems allow implementation of photonic technology in traditional RF systems for many applications, with enhanced performance. This trend presents significant advantages for photonic RF systems and greatly expands the horizon of photonic applications. For example, optical waves may be used as a carrier to transport the information contained in RF signals through optical fibers to remote locations in a photonic RF system. This also allows some of the RF signal processing functions such as signal mixing, antenna beam steering, and signal filtering, to be accomplished optically.

One key area in RF technology is RF oscillators which have a wide range of applications including time standards and telecommunications. There are a variety of RF oscillators including mechanical oscillators (e.g., a quartz resonator), electromagnetic oscillators (e.g., LC oscillator), and atomic oscillators (e.g., masers and lasers). To achieve low noise and long-term stability, hybrid oscillators that combine the merits of different oscillators have been developed for various applications. Electronic RF oscillators based on vacuum tubes or solid-state transistors are among the most commonly used RF oscillators in electronic devices and systems.

The stabilization of the oscillation frequency in an oscillator is also important. Electronic RF oscillators are often stabilized with other type of oscillators for long-term stability. For example, electromagnetic oscillators of dielectric cavities and mechanical resonators made of quartz crystals are often used for this purpose. In particular, quartz crystal resonators can achieve a high cavity Q factor at room temperatures. Few other oscillators can do this. However, a quartz crystal resonator only have a few resonant modes at low frequencies (e.g. , less than 100 MHz) and thereby the frequency tuning range of a quartz crystal resonator is limited. Thus, such a quartz crystal resonator has limited use in many applications that require large tunability and high frequency.

Moreover, traditional RF oscillators cannot meet the requirements of an application that involves RF signals in both the optical and electrical domains. An ideal oscillator for photonic RF systems should be able to generate RF signals in both the optical and electrical domains. In addition, it should be possible to synchronize or control the oscillator by both electrical and optical references or signals.

Several photonic techniques for generating highfrequency RF signals have been developed. For example, one way of generating a high frequency RF signal in the optical domain is to modulate a diode laser or an external electro-optical (E/O) modulator using a highfrequency stable electrical signal from a local oscillator. Such a local oscillator signal is generally obtained by multiplying a low frequency reference (e.g. quartz oscillator) to a desired high frequency (e.g., 32 GHz), with several stages of multipliers and amplifiers. Consequently, the overall system is bulky, complicated, inefficient, and costly. An other way to generate photonic RF carriers is to obtain a beat signal by mixing two lasers operating at different optical frequencies. This technique, however, produces a wide bandwidth in the generated RF signal and the frequency stability of the beat signal is poor due to the frequency drift of the two lasers.

The invention features novel opto-electronic oscillators for photonic RF systems. The oscillator, which may also be referred to as a photonic oscillator, is capable of generating stable signals at frequencies up to 70 GHz in both the electrical domain and the optical domain. The oscillator also functions as a voltage controlled oscillator with optical and electrical outputs. It can be used to make a phase locked loop (PLL) and to perform all functions performed for RF systems by a traditional PLL for photonic systems. It has optical and electrical inputs, and can be synchronized to a remote reference source by optical or electrical injection locking. It can also be self phase-locked and self injection-locked to generate a high stability photonic RF reference. Applications of the opto-electronic oscillator include high frequency reference regeneration and distribution, high gain frequency multiplication, comb frequency and square wave generation, and clock recovery. The oscillator is inherently unidirectional, immune to back reflections in the loop, and therefore generically stable.

Essentially, an opto-electronic oscillator includes an electro-optical modulator that is controlled by a feedback loop between an optical output and an electrical control port of the modulator. The feedback loop preferably includes an optical fiber that delivers the optical output to a photodetector. The photodetector converts the optical signal to the electrical signal supplied to the control port. The loop also includes an amplifier and a filter, and an RF coupler that permits the insertion of an external electrical control signal and the extraction of an electrical output signal. An optical coupler positioned before the photodetector permits the insertion of an external optical control signal. The oscillation frequency of the opto-electronic oscillator is controlled by the external control signals and by signals applied to a bias port of the E/O modulator and to a fiber stretcher. The fiber stretcher is connected to the fiber in the feedback loop .

When the opto-electronic oscillator is used for clock recovery or carrier regeneration, it provides a number of advantages over traditional techniques. First, it operates at speeds of up to 70 GHz, and is limited only by the speeds of the photodetector and the E/O modulator of the oscillator. In addition, the amplitude of the recovered signal (clock or carrier) is constant, and is independent of the input power of the signal to be recovered. This is particularly important in clock recovery for time division multiplexed systems, because the clock component contained in the received data stream may vary with time and sender. Also, the recovered signal may be accessed both optically and electrically, which provides easy interfacing with complex systems.

The inventors recognized that since clock recovery and carrier regeneration with an opto-electronic oscillator is based on injection locking, its acquisition time is much shorter than that of a recovery device based on a phase locked loop. Fast acquisition is important for high speed communications such as burst mode communications. In addition, the tracking range is on the order of a few percent of the clock frequency, compared to less than 100 Hz for a device based on a phase locked loop. This, of course, means that the device does not have to be precisely tuned to match the incoming data rate.

The opto-electronic oscillator can be tuned over many tens of MHz by changing the filter in the feedback loop, and may be fine tuned by changing the loop delay (by stretching the fiber) or the bias point of the electro-optical modulator. This makes the device flexible in accommodating different systems, designs and signal conditions.

The above-described opto-electronic oscillator has a single optical feedback loop. The inventors of the present invention recognized to further reduce the phase noise, increase the spectral purity, and expand the continuous tuning range of such opto-electronic oscillators, multiple feedback loops are desirable. For convenience of discussion, a single loop Opto-Electronic oscillator (OEO) is referred as a *single loop OEO* and an OEO with multiple feedback loops is referred as a *multiloop OEO*.

In recognition of the need for a wide range of tunability in photonic RF oscillator, the inventors further improve the above-described single loop OEO by implementing multiple feedback loops. Specifically, a long fiber feedback loop is incorporated in the multiloop OEO disclosed herein to achieve RF and microwave oscillations. The ultra-low phase noise and a wide range of frequency tunability of the multiloop OEO of the present invention are superior than many other oscillators including the single-loop OEO. The multiloop OEO presents significant advantages and improvements over the singe-loop OEO by employing multiple optical feedback loops with different delay lengths.

One aspect of the present invention is the significantly lower noise and very high stability that are rarely obtainable in an electronic oscillator and many other oscillators. In particular, the multiloop OEO is capable of achieving spectral purity that is much better than many crystal oscillators. The superior performance of the multiloop OEO results from the use of electro-optical and photonic devices which are generally characterized with high efficiency, high speed, and low dispersion in the RF and microwave spectral range. For instance, photodetectors capable of responding to signals of 110 GHz at nearly 90% quantum efficiency have been reported. Electro-optical modulators with a response as high as 75GHz are now available. Commercial optical fibers with a low loss of 0.2dB/km at 1550nm allows long storage time of optical energy with negligible dispersive loss for intensity modulations at microwave frequencies.

Another aspect of the invention regards the low phase noise present in the oscillation. According to the disclosed system, the phase noise deceases quadratically with the loop delay time. Therefore, a long delay loop is incorporated in the multiloop feedback lines to minimize the phase noise.

Still another important aspect of the present invention is frequency tunability. The multiloop OEO has multiple feedback loops of different delay lengths. While the shortest feedback loop generates the modes of widest mode spacing in the frequency domain, the longest feedback loop produces modes of smallest mode spacing. The former dictates the continuous tuning range in the present invention and the latter determines the tuning resolution. Thus it is advantageous to have a large mode spacing by using one short feedback loop for a wide tuning range. According to the present invention, it is also beneficial to include one long feedback loop to obtain both a high tuning resolution and a low phase noise. By using at least one long delay loop and one short delay loop in a multiloop system, the present invention combines the advantages of both feedback loops to achieve a high-performance photonic RF system as disclosed herein.

For a tuning range beyond the mode spacing of the shortest feedback loop, the disclosed system uses a tunable RF filter in the feedback loop to shift the overall frequency spectral window of the multiloop OEO. Moreover, as the number of feedback loops increases, the bandwidth of the resonance peak of the oscillation decreases and this allows the stability and spectral purity to be improved.

Yet another unique aspect of the present invention is its versatile applications. The multiloop OEO is a hybrid oscillator in that both electrical and photonic components are used to achieve the oscillation. In particular, both electrical and optical inputs and outputs are supported in the present invention. This unique feature presents considerable advantages and flexibility to photonic applications wherein electronic and optical devices are integrated. In addition, the multiloop OEO of the present invention can be used as a frequency synthesizer.

These and other aspects of the present invention will now be discussed in detail with respect to the following accompanying figures, in which:

Brief Description of the Drawing

Figure 1A is a block diagram of an opto-electronic oscillator.

Figure 1B is a symbolic representation of the opto-electronic oscillator of Figure 1A.

Figures 2A and 2B are graphs of spectra of a free running opto-electronic oscillator oscillating at 9.22 GHz (Figure 2A) and 100 MHz (Figure 2B).

Figures 3A and 3B are graphs of oscillation amplitude as a function of open loop gain, where Figure 3A provides theoretical curves and Figure 3B presents experimental data.

Figure 4A is a graph of an opto-electronic oscillator's frequency relative to the bias voltage of an electro-optical modulator of the oscillator.

Figure 4B is a graph of an opto-electronic oscillator's oscillation power relative to bias voltage.

Figure 4C is a graph of an opto-electronic oscillator's measured phase noise as a function of frequency offset.

Figure 4D is a graph of an opto-electronic oscillator's measured phase noise as a function of loop delay time, extrapolated from the curves of Figure 4A.

Figure 4E is a graph of experimental results of the phase noise of an opto-electronic oscillator at frequencies 100 MHz, 300 MHz, 700 MHz, and 800 MHz.

Figure 5A is a graph of phase noise of an opto-electronic oscillator.

Figure 5B is a graph of locking range as a function of the square-root of the injection power.

Figure 6A is a block diagram of the opto-electronic oscillator of Figure 2 in a self-injection locking configuration.

Figure 6B is a graph of the frequency response of the configuration of Figure 6A.

Figures 7A and 7B are block diagrams of the opto-electronic oscillator configured as a phase locked loop, with Figure 7A illustrating phase locking to a reference source and Figure 7B illustrating self-phase locking.

Figure 8 is a block diagram of the opto-electronic oscillator of Figure 2 when configured for photonic down conversion.

Figure 9 is a block diagram of the opto-electronic oscillator of Figure 2 configured for reference regeneration and distribution.

Figures 10A and 10B are block diagrams of the opto-electronic oscillator of Figure 2 configured for frequency multiplication, with Figure 10A illustrating frequency multiplication using nonlinearity of the opto-electronic oscillator, and Figure 10B illustrating frequency multiplication using a laser diode's nonlinearity.

Figures 11A and 11B are graphs of comb frequencies (Figure 11A) and square waves (Figure 11B) produced by an opto-electronic oscillator.

Figure 12 is a block diagram of the opto-electronic oscillator of Figure 2 in a loop-length stabilization configuration.

Figures 13A and 13B are graphs of frequency responses of an opto-electronic oscillator.

Figures 14A and 14B are block diagrams of the opto-electronic oscillator of Figure 2 configured for clock (Figure 11A) and carrier (Figure 11B) recovery.

Figure 15 is a block diagram of a clock recovery, synchronization and signal recovery system.

Figure 2X shows a dual loop OEO which is a special case of a multiloop OEO disclosed in the present invention.

Figure 3X (which includes Figs. 3xa-c) are theoretical calculations by a quasi-linear model for a dual loop OEO.

Figure 4X shows an experimental setup for a dual loop OEO tested by the present inventors.

Figure 5X (which includes Figs. 5xa-c show the measurements performed with the setup of Figure 4X.

Figure 6Xa shows an experimental setup for measuring the phase noise in a dual loop OEO.

Figure 6Xb shows the phase noise measurements from the setup in Figure 6Xa.

Figure 7X shows the experimental setup for measuring the phase noise in a high performance HP frequency synthesizer in comparison with a dual loop OEO.

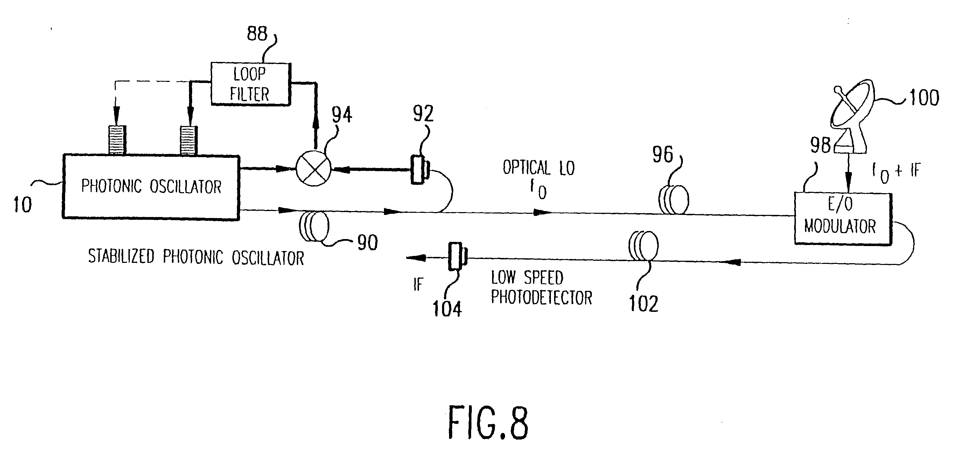

Figure 8X (which includes Figs. 8xa-e) illustrate various configurations of dual-loop OEO based on a feedback to E/O modulator.

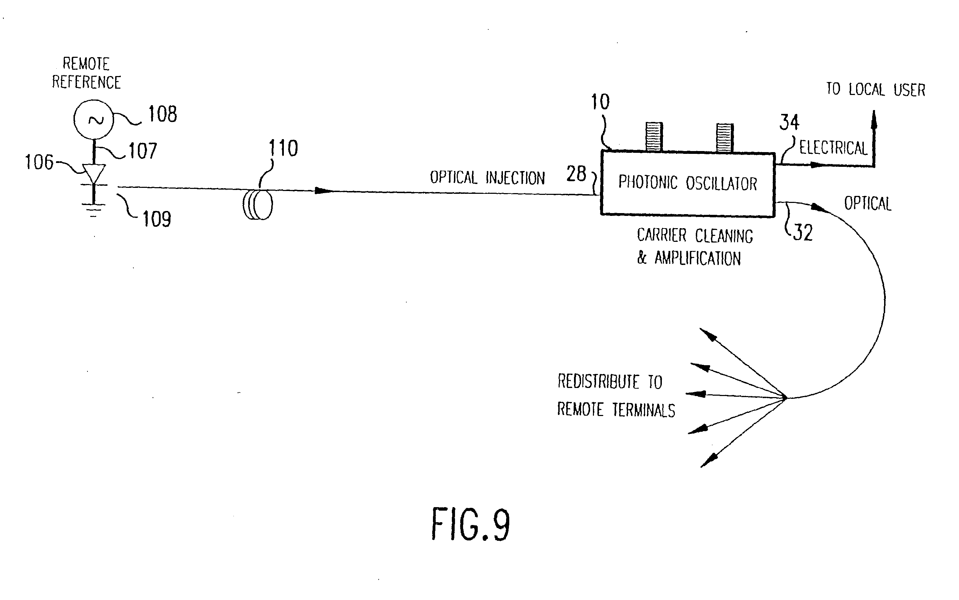

Figure 9X shows one embodiment of dual loop OEO using direct feedback to the driving light source.

Figure 10X shows another embodiment of dual loop OEO using direct feedback to the driving light source.

Figure 11X (which includes Figs. 11xa-b show the spectral measurements of the driving laser in a system as shown in Figure 10X.

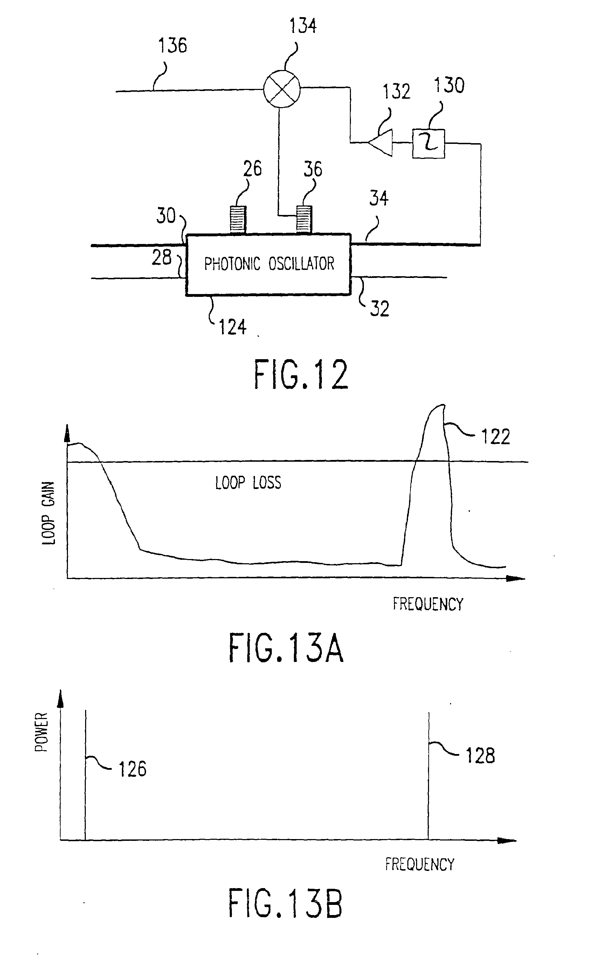

Figure 12X (includes Figs. 12xa-d) depict examples of various modulation schemes for a multiloop OEO in accordance with the present invention.

Description of the Preferred Embodiments

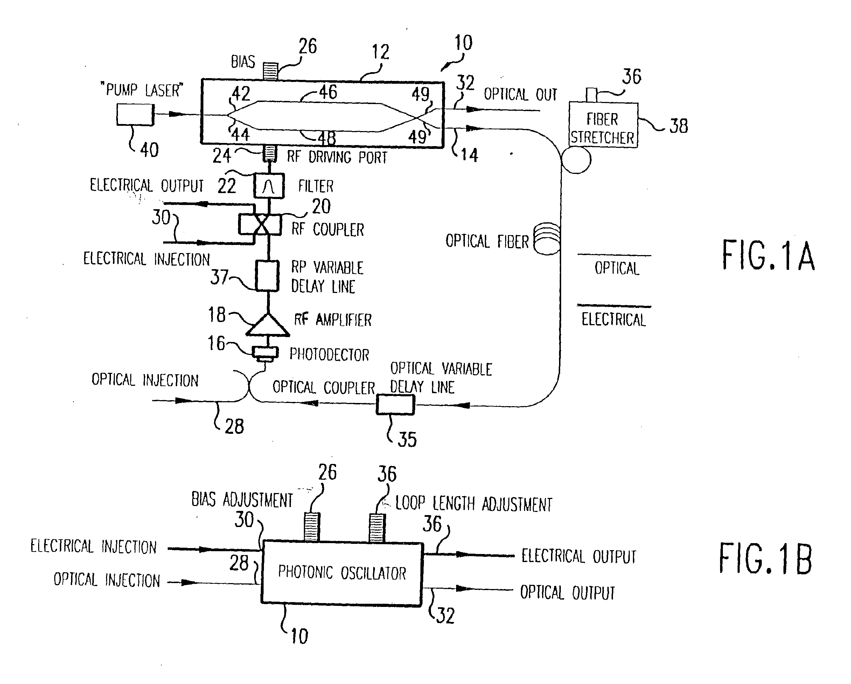

As illustrated in Figure 1A, an electro-optical ("E/O") oscillator 10 includes an E/O modulator 12. Light from an output port 14 of the E/O modulator 12 is detected by a photodetector 16 that converts the light to an electrical signal. The electrical signal is supplied to an RF amplifier 18 that amplifies the signal. After passing through an RF coupler 20 and a bandpass filter 22, the amplified signal is supplied to an electrical input port 24 of the E/O modulator 12. The RF amplifier 18 increases the open loop gain of the system, and the bandpass filter 22 removes unwanted oscillation modes. The amplifier and filter, which are not critical to system operation, are each optional components.

Proper biasing of the E/O modulator 12 is critical for proper operation of the opto-electronic oscillator 10. The biasing point of modulator 12 determines whether the oscillator is bistable, oscillatory or chaotic. Biasing is carried out through bias port 26.

If the E/O modulator 12 is properly biased through bias port 26, and the open loop gain of the feedback loop between output port 14 and RF driving port 24 is properly chosen, self oscillation is sustained. Both optical and electrical processes are involved in the oscillation as described herein; hence, an optical subcarrier and an electrical signal are generated simultaneously. The optical subcarrier is generated at an optical output 32 of the E/O modulator. The electrical signal is generated at an electrical output 34 of the RF coupler 20.

The single loop OEO 10 includes an optical variable delay line 35 and/or an RF variable delay line 37. Delay lines 35, 37 permit large changes to the loop delay of single loop OEO 10 and thereby permit the oscillation frequency of single loop OEO 10 to be adjusted over a large range of frequencies, such as a one hundred megahertz or a few gigahertz. The variable delay lines may be manually or electrically adjusted.

The oscillation frequency of single loop OEO 10 is fine-tuned through a bias port 26 and a loop length adjustment port 36. Bias port 26 biases the E/O modulator 12. Loop length adjustment port 36 is connected to a fiber stretcher 38 for controlling the loop length and thereby controlling the loop delay.

The above-described single loop OEO can be summarized by the simple functional block diagram shown in Figure 1B. The oscillator 10 is a six-port device, with an optical injection port 28, an electrical injection port 30, an optical output port 32, an electrical output port 34, and two voltage controlling ports. Bias port 26 biases the E/O modulator 12. Loop length adjustment port 36 is connected to a fiber stretcher 38 for controlling the loop length and thereby controlling the loop delay. Because delay lines 35 and 37 typically are not adjusted during operation, they are not illustrated as ports in the functional block diagram of Figure 1B. However, they may be adjusted during operation in some applications.

As will be explained below, the two injection ports 28, 30 operate to injection lock the single loop OEO 10 to a reference source either optically or electrically. The two output ports 32, 34 provide an RF carrier in both an optical form (port 32) and an electrical form (port 34). Finally, the two controlling ports 26, 36 operate to tune the oscillation frequency and voltage-control the frequency of single loop OEO 10. The six ports collectively simplify interfacing of the oscillator to a photonic RF system.

E/O modulator 12 is preferably of the well known Mach-Zehnder type. Alternately, it can be a directional coupler modulator, an electro-absorption modulator, or a quantum well modulator. Modulator 12 generates optical outputs at ports 14 and 32 based on an optical input from an optical source, preferably a pump laser 40. The light from the pump laser 40 is separated into two beams 42, 44 that are directed to wave guides 46, 48 on opposite sides of the modulator 12. The beams 42, 44 are guided in the wave guides 46, 48. The beams then recombine to produce the optical outputs 49 of the modulator.

If the two beams travel paths of different lengths, the beams will be out of phase with each other when they are recombined. The resulting signal will hence have a beat frequency that varies with the phase difference between the beams. The voltages applied to ports 24 and 26 move the reflective surfaces 46, 48 and thereby change the lengths of the paths along which the beams 42, 44 travel. Because the phase difference between the beams varies with the difference in the path lengths, the frequency of the output signal of the E/O modulator 12 is controlled by controlling the voltages applied to ports 24 and 26. The voltage applied to the bias port 26 establishes the initial phase difference between the beams and thereby establishes the initial beat frequency.

One important feature of this modulator is the interconnection between the optical and electrical systems in the feedback loop. The optical and electrical signals are both used in feedback: hence both are inherently locked together. If either signal changes, that change is accommodated by the feedback loop.

Note also that the modulator 12 could produce electrical signals at 14, in which case photodetector 17 is replaced by a photodiode, and both optical and electrical signals still are used in the feedback loop.

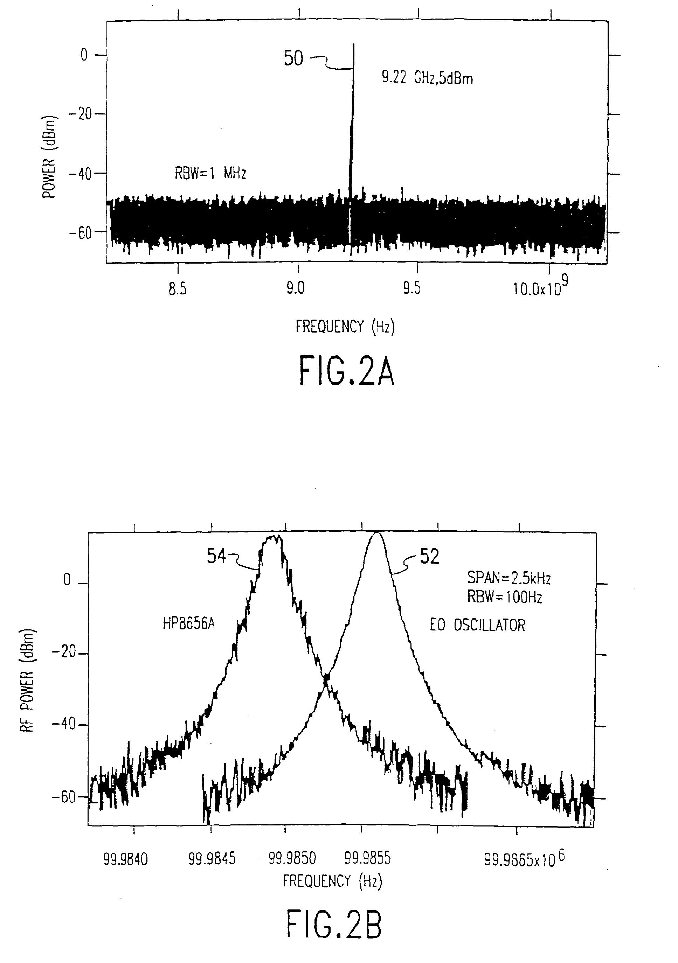

The single loop OEO can use different E/O modulators 12 and a diode-pumped YAG laser at a wavelength of 1310 nm to generate optical subcarriers as high as 9.2 GHz. Figure 2A shows the RF signal 50 generated at 9.2 GHz and Figure 2B shows the signal 52 generated at 100 MHz. In both cases, the single loop OEOs are free running and no effort was made to reduce the noise of the oscillators. For comparison, a signal 54 from a HP8656A signal generator is also shown in Figure 2B. The spectral purity of signal 52 is dramatically better than that of signal 54.

In the embodiment producing the results of Figure 2A, the Mach-Zehnder modulator has a bandwidth of 8 GHz and a half wave voltage $V_\pi$ of approximately 17 V. The photodetector has a bandwidth of 12 GHz and a response of approximately 0.35 A/W. The amplifier has an electrical power gain of 50 dB, a bandwidth of 5 GHz centered around 8 GHz, and output dB compression of 20 dBm. The input and output impedances of all electrical components are 50 $\Omega$. The loop length is approximately 9 meters. In other embodiments, the modulator could be, for example, a directional coupler modulator or an electro-absorption modulator.

As is well known, ambient noise will cause an oscillator to begin oscillating if the gain of a feedback loop of the oscillator is sufficient to amplify the feedback signal of the oscillator relative to the output signal thereof (i.e., when the gain is greater than one). Thus, to start oscillation from noise, the open loop gain of the single loop OEO 10 must be larger than one. The open loop gain of the single loop OEO is simply the RF power gain of an externally-modulated photonic link and is given by:

$$G_{open}^2 = G_{amp}^2 \pi^2 \frac{I_{ph}^2 R_L}{V_x^2 / R_m}, \tag{1}$$

where $G_{open}$ is the open loop voltage gain, $I_{ph}$ is the photocurrent in the receiver, $R_L$ is the load resistance of the receiver, $R_m$ is the input impedance of the modulator, $V_\pi$ is the half-wave voltage of the modulator, and $G_{amp}$ is the voltage gain of the amplifier following the photoreceiver. The modulator 12 in Equation 1 is assumed to be a Mach-Zehnder modulator that is biased at quadrature. The oscillation condition of the single loop OEO is thus $G_{open} \geq 1$. For $R_L = R_m = R$, this condition becomes:

$$I_{ph} R G_{amp} \geq V_\pi / \pi, \tag{2}$$

It is important to note that the amplifier in the loop is not a necessary condition for oscillation. If $I_{ph} R \geq V_\pi / \pi$, no amplifier is needed ($G_{amp} = 1$). The optical power from the pump laser actually supplies the necessary energy for the single loop OEO. This is significant because it means that, when the amplifier is eliminated, the single loop OEO may be powered remotely using an optical fiber. In addition, elimination of the amplifier in the loop would also eliminate any noise associated with the amplifier, and would result in a more stable oscillator. For a modulator with a $V_\pi$ of 3.14 volts and an impedance R of 50 $\Omega$, a photocurrent of 20 mA is required to sustain the photonic oscillation without an amplifier. This corresponds to an optical power of 25 mW, taking the response $\rho$ of the photodetector to be 0.8 A/W.

The optical power from the output port that forms the loop is related to an applied voltage by:

$$P(t) = (\alpha P_o / 2)\{1 - \eta \sin \pi [V(t)/V_\pi + V_B/V_\pi]\}, \tag{3}$$

where $\alpha$ is the fractional insertion loss of the modulator, $V_B$ is the bias voltage, and $\eta$ relates to the extinction ratio of the modulator by $(1+\eta)(1-\eta)$. If P(t) has a positive slope as a function of driving voltage V(t), the modulator is said to be positively biased, otherwise it is negatively biased. Consequently, when $V_B = O$, the modulator is biased at negative quadrature, while when $V_B = V_\pi$, the modulator is biased at positive quadrature. Note that in most externally modulated photonic links, the E/O modulator can be biased at either positive or negative quadrature without affecting its performance. However, as will be seen next, the biasing polarity will have an important effect on the operation of the single loop OEO 10.

The applied voltage V(t) of the single loop OEO is the photovoltage after the filter in the loop: $V(t) = \rho R G_{amp} P$

(t), where $\rho$ is the response of the detector, R is the loop impedance, and $G_{amp}$ is the amplifier voltage gain. The recurrence relation of the oscillating signal in the loop can be easily obtained from Equation 3 to be:

$$u(t) = u_o\{1-\eta\sin\pi[u(t-\tau) +u_B]\}, \tag{4}$$

where $\tau$ is the loop delay time, and $u_O$, $u_B$, and u(t) are the normalized photovoltage, normalized bias voltage, and normalized oscillation voltage respectively. They are defined as:

$$u_O = I_{ph}RG_{amp}/V_k, \tag{5}$$

$$u_B = V_B/V_k, \tag{6}$$

$$u(t) = V(t)/V_\pi. \tag{7}$$

In Equation 5, $I_{ph}=\alpha\rho P_o/2$. Equation 4 simply relates the oscillation voltage at t with that of an earlier time, t-$\tau$.

The oscillating voltage at steady state should repeat itself after a round trip in the loop, that is, u(t) = u(t-$\tau$). This is the self-consistent condition. When a filter in the loop permits only one frequency ($\omega_o$) to oscillate, the solution to Equation 4 has the form:

$$u(t) = a\,sin(\omega_o t+\phi_o), \tag{8}$$

where a is the normalized oscillation amplitude and $\phi_O$ is the phase. Note that in expressing Equation 8 this way, the observation point of the field is chosen to be right after the filter. Substituting Equation 8 in Equation 4 and using the self-consistent condition produces:

$$a\,\sin(\omega_o t+\phi_o) =u_o\{1-\eta\,\sin\pi\{a\,\sin[\omega_o(t-\tau)+\phi_o]+u_B\}\}. \tag{9}$$

Expanding the right hand side of Equation 9 using the Bessel function and picking out the term with the fundamental frequency component results in:

$$a\sin(\omega_o t+\phi_o) = -2u_o\eta J_1(\pi a)\cos(\pi u_B)\,\sin(\omega_o t+\phi_o-\omega_o\tau). \tag{10}$$

Since the oscillation amplitude $V_{osc}$ of the oscillator is usually much less than $V_\pi$, the following discussion is restricted to the case in which $J_1(\pi a) \geq 0$ or $\alpha = V_{osc}/V_\pi \leq 1.21$. With this restriction, Equation 10 results in the following relations for determining the oscillation amplitude and frequency:

$$J_1(\pi a)=\frac{\pi a}{2G_{open}}\,, \tag{11}$$

$$f_o= (k+1/2)\,/\tau\ for\ \cos\pi u_B > 0, \tag{12a}$$

$$f_o=k/\tau\ for\ \cos\pi u_B < 0, \tag{12b}$$

where $f_o = \omega_o/2\pi$ and k is an integer. It is interesting to note from Equation 12 that the oscillation frequency depends on the biasing polarity of the modulator. For negative biasing ($\cos\pi u_B > 0$), the fundamental frequency is 1/(2$\tau$), while for positive biasing ($\cos\pi u_B < 0$), the fundamental frequency is doubled to 1/$\tau$.

$G_{open}$ in Equation 11 is the open loop voltage gain of the oscillator and is defined as

$$G_{open} = \frac{\pi I_{ph} R G \eta |\cos \pi u_B|}{V_k} \; . \tag{13}$$

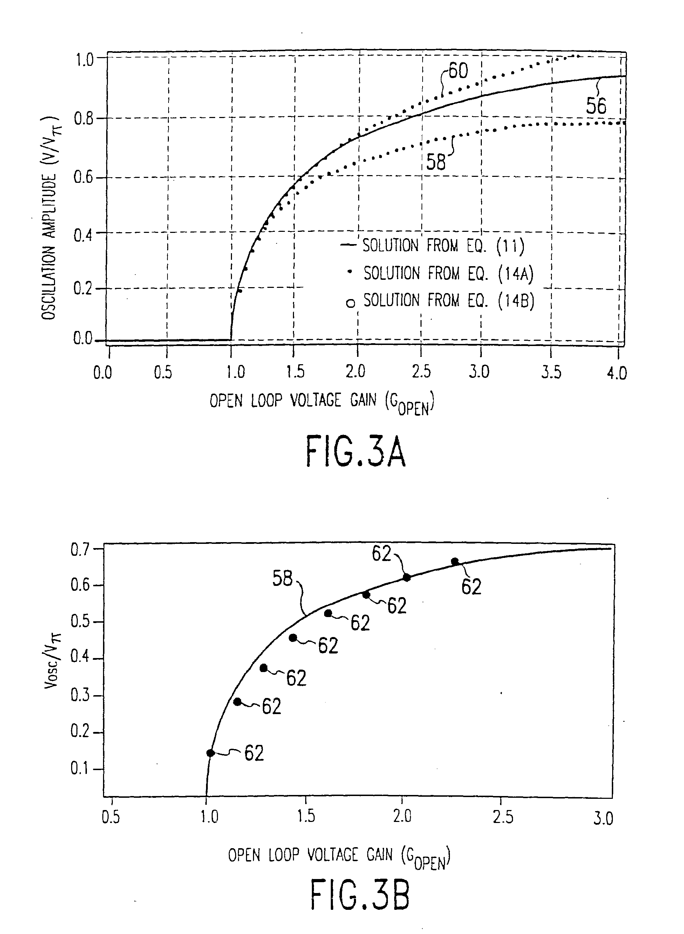

For the ideal case in which $\eta = 1$ and $|\cos \pi u_B| = 1$, $G_{open}$ equals the value expected from Equation 1. The amplitude of the oscillation can be obtained by graphically solving Equation 11. The result is shown in Figure 3A.

Equation 9 can also be solved by expanding its right side into a Taylor series. The resulting normalized oscillation amplitude is:

$$a = \frac{V_{DSC}}{V_k} = \frac{2\sqrt{2}}{\pi} \sqrt{1 - \frac{1}{G_{open}}} \; , \; (3rd \; order \; expansion) \tag{14a}$$

$$a = \frac{V_{osc}}{V_\pi} = \frac{2\sqrt{3}}{\pi} \left[ 1 - \frac{1}{\sqrt{3}} \sqrt{\frac{4}{G_{open}} - 1} \right]^{1/2} , \; (5th \; order \; expansion) \tag{14b}$$

It is clear from Equation 14 that the threshold condition for oscillation is $G_{open} \geq 1$ or $I_{ph} R G \eta |\cos u_B| \geq V_\pi / \pi$. The oscillation frequency obtained using this procedure is the same as is produced by Equation 12.

Figure 3A shows the graphically-obtained normalized oscillation amplitude from Equation 11 (56), Equation 14a (58) and Equation 14b (60), respectively. Comparing the three theoretical curves one can see that for $G_{open} \leq 1.57$, the 3rd order expansion result is a good approximation. For $G_{open} \leq 3.14$, the fifth order expansion result is a good approximation. Figure 3B shows the experimental data 62 and is in good agreement with the theoretical results of Equation 14a (58).

As described above, the oscillation frequency of the single loop OEO 10 can be tuned by changing the loop length using a piezo-electric stretcher 38. The frequency change, $\Delta f$, is given by $\Delta f = -f_o \Delta L/L$, where L is the loop length, $\Delta L$ is the loop length change, and $f_o$ is the nominal oscillation frequency. However, the tuning sensitivity (Hz/volt) is expected to be small.

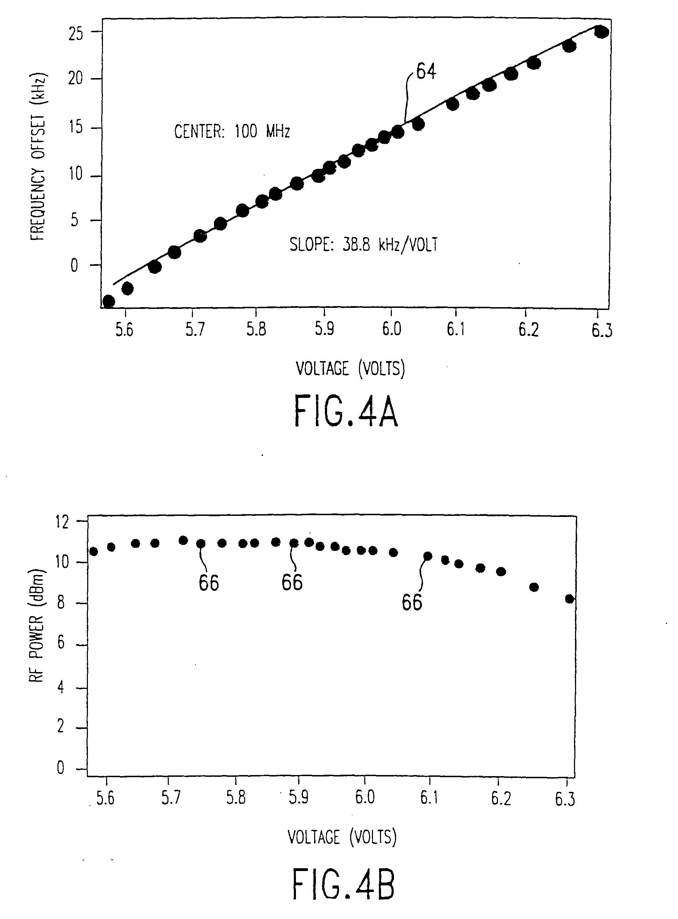

The oscillation frequency can also be tuned by changing the bias voltage of the E/O modulator 12. Figure 4A shows that the frequency detuning 64 of the oscillator 10 is linearly proportional to the bias voltage, with a slope of 38.8 kHz/volt. The output power 66 of the oscillator 10 remains relatively unchanged in a wide voltage range, as shown in Figure 4B. This result is significant because it provides a simple way to tune the oscillation frequency with high sensitivity and is instrumental for implementing a phase locked loop (PLL) using the single loop OEO 10.

The noise properties of the E/O oscillator 10 have also been analyzed. The RF spectral density of the E/O oscillator 10 obtained from the analysis is:

$$S_{RF}(f') = \frac{\delta}{(\delta/2\tau)^2 + (2\pi)^2 (\tau f')^2} \; , \tag{15}$$

where $\tau$ is the total group delay of the loop, $f'$ is the frequency offset from the oscillation frequency, and $\delta$ is the input noise to signal ration of the oscillator, which is defined as:

$$\delta = \rho_N G_{amp}^2 / P_{osc}. \tag{16}$$

In Equation 16, $\rho_N$ is the equivalent input noise density injected into the oscillator from the input port of the amplifier, which includes the contributions of thermal noise, shot noise, and the laser's relative intensity noise. In addition, $P_{OSC}$ is the total oscillating power measured after the amplifier and it relates to the oscillation amplitude $V_{OSC}$ in Equation 11 and Equation 14 by $P_{OSC} = V_{OSC}^2/(2R)$.

As can be seen from Equation 15, the spectral density of the oscillating mode is a Lorentzian function of frequency. The full width at half maximum (FWHM) $\Delta f_{FWHM}$ of the function is:

$$\Delta f_{FWHM} = \frac{1}{2\pi\tau^2}\delta \: . \tag{17}$$

From Equation 17 it can be one can see that $\Delta f_{FWHM}$ is inversely proportional to the square of loop delay time and linearly proportional to the input noise to signal ratio $\delta$. For a typical $\delta$ of $10^{-16}$/Hz and loop delay of 100 ns (20 m), the resulting spectral width is sub-millihertz. The fractional power contained in $\Delta f_{FWHM}$ is $\Delta f_{FWHM}S_{RF}(0) = 64\%$.

From Equation 15 it can be seen that:

$$S_{RF}(f') = \frac{4\tau^2}{\delta}, \qquad |f'| << \Delta f_{FWHM}/2, \tag{18a}$$

$$S_{RF}(f') = \frac{\delta}{(2\pi)^2(\tau f')^2}, \: |f'| >> \Delta f_{FWHM}/2. \tag{18b}$$

The single side band phase noise of a oscillation at a frequency offset $f'$ from the center frequency is equal to the spectral density at $f'$ if $f'$ is much larger than the line width of the oscillation. Therefore, it is evident from Equation 18b that the phase noise of the photonic oscillator decreases quadratically with the frequency offset $f'$. For a fixed $f'$, the phase noise decreases quadratically with the loop delay time. The larger the $\tau$, the smaller the phase noise.

Equation 15 also indicates that the oscillator's phase noise is independent of the oscillation frequency. This result is significant because it allows the generation of high frequency and low phase noise signals using the E/O oscillator 10. The phase noise of a signal generated using other methods generally increases linearly with the frequency.

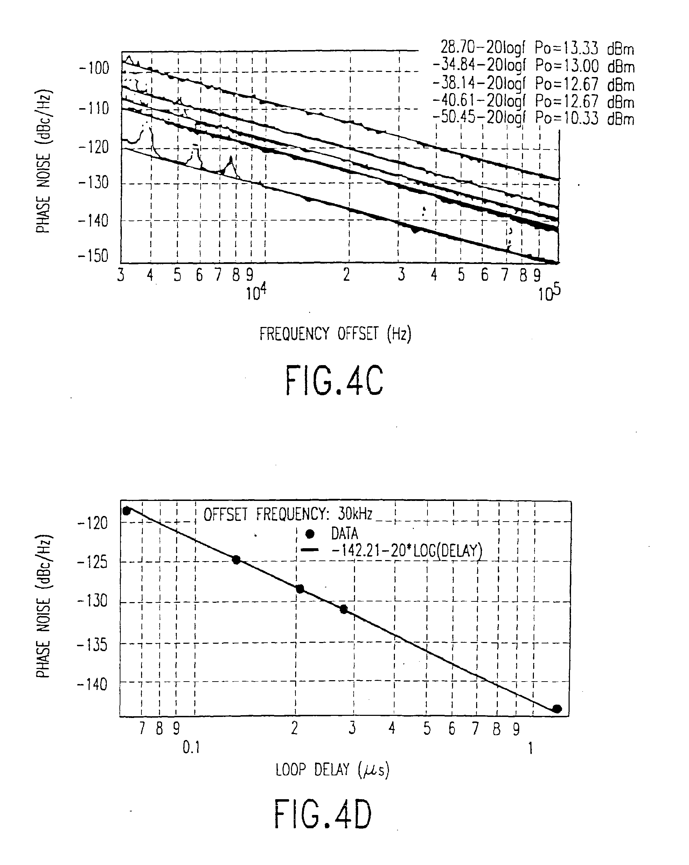

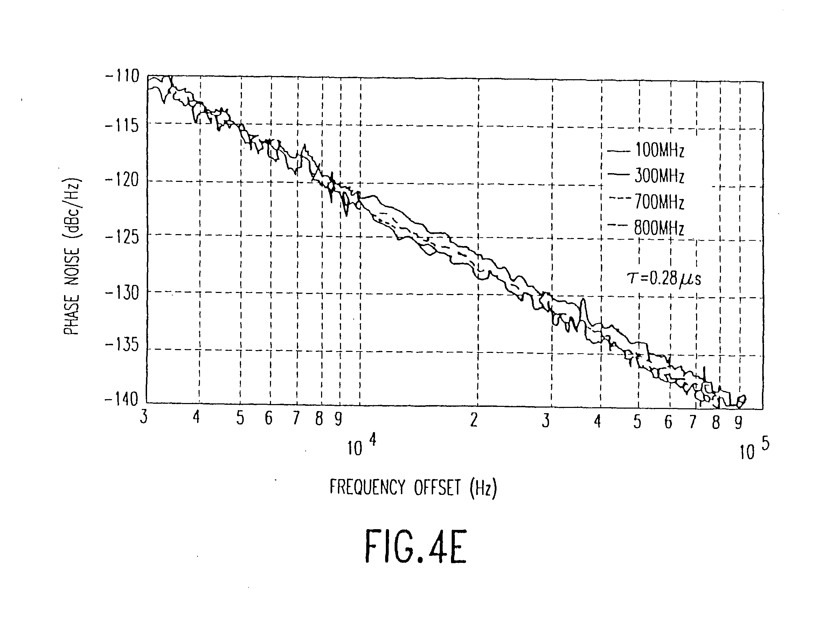

Figure 4C is the measured phase noise as a function of the frequency offset $f'$ plotted in a log scale. Clearly, the phase noise has a 20 per decade dependency with the frequency offset $f'$, which agrees well with the theoretical prediction of Equation 18b. Figure 4D is the measured phase noise as a function of loop delay time, extrapolated from the curves of Figure 4C. Again, the experimental data agrees well with the theoretical prediction. Figure 4E shows the experimental results of the phase noise of an E/O oscillator 10 at frequencies 100 MHz, 300 MHz, 700 MHz, and 800 MHz. The phase noise curves overlap with one another.

Injection locking is a commonly-used technique for synchronizing an oscillator with a reference frequency. The single loop OEO 10 can be injection locked by either an optical signal 28 or an electrical signal 30 as shown in Figures 1A and 1B. Optical injection locking of an oscillator is important to allow remote synchronization. This function is critical for high frequency RF systems that require many oscillators locked to a single master, as in a phased-array radar. Optical injection locking also allows the locking oscillator to be electrically isolated from the locked oscillator, which eliminates the need for impedance matching between the oscillators. Importantly, the present system allows locking to either optical or electrical signals.

Figure 5A shows the experimental results of injection locking the single loop OEO 10 with a maser reference at 100 MHz through the electrical injection port 30. Similar results are expected for optical injection since the optical injection signal 30 will first be converted to an electrical signal by internal photodetector 16 before affecting the E/O modulator 12.

As shown in Figure 5A, an injection power of -5 dBm results in the phase noise 68 of the single loop OEO 10 that is almost identical to that of the injected maser signal 70. Note that the output RF power of the single loop OEO is 13 dBm, resulting in a gain of 18 dB. As the injection power decreases, the phase noise of the single loop OEO increases somewhat. However, the output RF power remains the same so that the gain, effectively, is increased. The single loop OEO 10 has been injection locked experimentally to a maser reference with an injection power as low as -50 dBm.

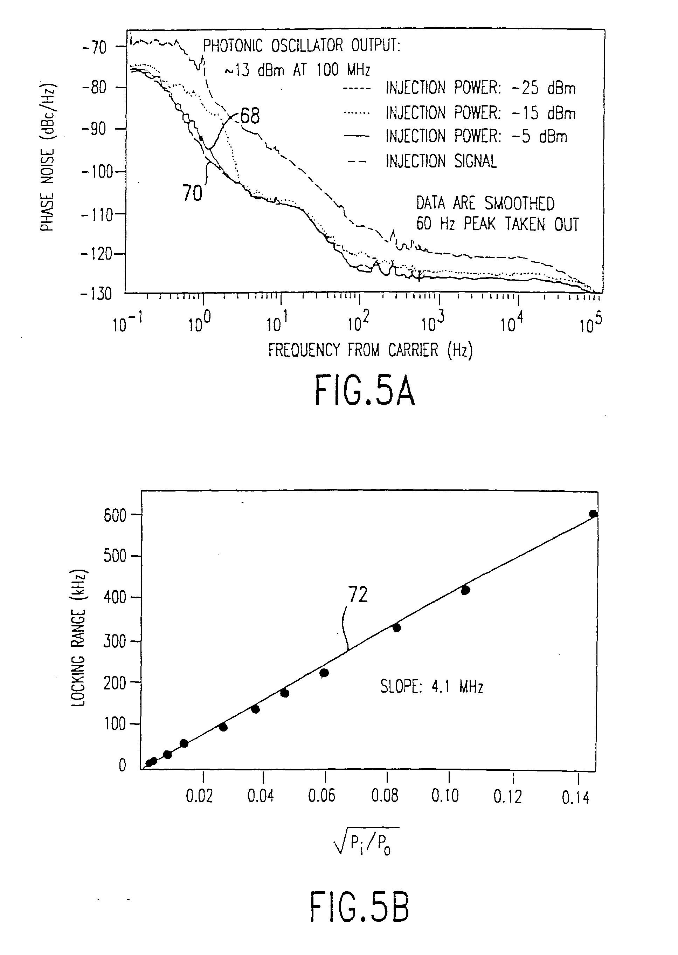

Figure 5B shows an experimentally produced locking range 72 as a function of injection power. As expected, the locking range is linearly proportional to the square-root of the injection power. This agrees well with the well-known Adler's injection locking theory.

Although injection locking is an effective way of synchronizing and stabilizing oscillators, it requires the oscillator to be supplied with a low noise and high stability source. However, at high frequencies, producing such a source is itself a difficult task.

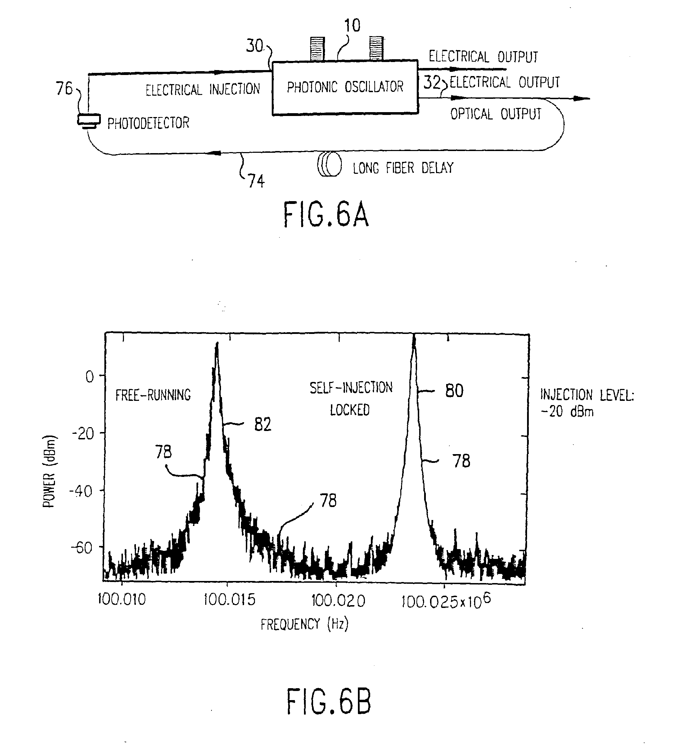

Another aspect of the present invention uses self-injection locking. This technique stabilizes the frequency and phase of the single loop OEO 10 to facilitate using the oscillator 10 as the frequency reference. This is illustrated in Figure 6A.

The self-injection locking sends a small portion of the output optical signal from the E/O oscillator through a fiber delay line 74 that is typically at least one kilometer long and may be many kilometers long. A photodetector 76 converts the output from the fiber delay line 74 to an electric signal and feeds the electrical signal back to the RF driving port 30 of the E/O modulator 12. Note that the open-loop gain of this feedback loop should be kept well below unity to prevent self-oscillation. Basically, self-injection locking injects a delayed replica of the E/O oscillator's output 32 back to the oscillator 10 and forces the oscillator 10 to lock to its "past". This tends to prevent the oscillator 10 from changing its frequency and phase, and thereby reduces or eliminates frequency and phase fluctuations that may be caused by noise sources such as temperature fluctuations, acoustic perturbations and amplifier noise. The frequency stability of the oscillator 10 is proportional to the length fluctuation $\Delta L/L$ of the fiber delay line, which can be known and controlled very precisely.

Figure 6B provides experimental results 78 showing the effectiveness of the self-injection technique (peak 80) in reducing the frequency noise of the E/O oscillator 10 relative to a free-running E/O oscillator (peak 82). The length of the delay line 74 used in the experiment is 12 km and the feedback injection RF power is -19.23 dBm. It is evident that self-injection locking greatly reduces the frequency fluctuations of the E/O oscillator.

Even further noise reduction can be obtained by reducing the length fluctuation of the fiber delay line 74 by temperature control of the environment and isolation from acoustic vibrations.

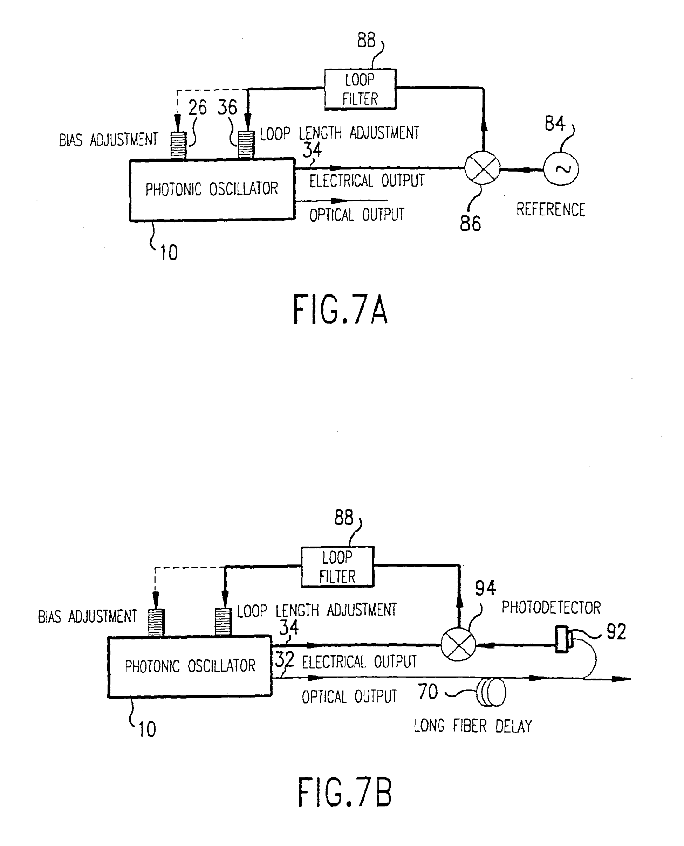

Because the single loop OEO is also a voltage controlled oscillator (VCO), it can be synchronized to a reference source 84 via a phase locked loop as shown in Figure 7A. A summing junction 86 combines the reference 84 and the electrical output 34 of the single loop OEO 10, and supplies the result to the loop length adjustment terminal 36 or the bias terminal 26 after passing the result through a loop filter 88.

One unique property of the single loop OEO is its optical output 32. This optical output permits stabilization through a self-phase locked loop, as shown in Figure 7B. In a similar way to the self-injection locking described above, a self-phase locked loop forces the oscillator to be locked to its past and prevents fluctuation. The optical output 32 of the single loop OEO is passed through a long fiber delay line 90. A photodetector 92 monitors the output of the fiber delay line and produces an electrical signal corresponding to the output. This electrical signal is supplied to a summing junction 94 that sums the signal with the electrical output 34 of the single loop OEO and supplies the result to one of ports 26, 36 after passing it through a loop filter 88.

There have been previous suggestions to use a delay line to stabilize an oscillator. However, effective stabilization of an optical oscillator was considered impractical. The reason is exemplified by systems like that proposed by R. Logan et al. ("Stabilization of Oscillator Phase Using a Fiber Optic Delay-Line", Proceedings of the 45th Annual Symposium on Frequency Control (IEEE Ultrasonic Ferroelectric and Frequency Control Society), May 29-31, Los Angeles, California, 1991). Logan proposed a fiber optic delay line to stabilize a traditional VCO. The fiber optic delay line included a laser transmitter to convert the electrical output of the VCO into an optical signal that was then transmitted through a few kilometers of fiber. The single loop OEO 10 automatically produces an optical output. The inventors recognized that this makes it ideally suited for use with the fiber delay line technique of self-stabilization. No electrical to optical signal conversion is necessary. Consequently, the device is simple, low loss, and relatively inexpensive.

As mentioned earlier, the single loop OEO 10 is a photonic VCO with both optical and electrical outputs. It can perform for photonic RF systems all functions that a VCO is capable of performing for RF systems. These functions include generating, tracking, cleaning, amplifying, and distributing RF carriers. In a phase locked loop configuration, the photonic VCO can also be used for clock recovery, carrier recovery, signal modulation and demodulation, and frequency synthesis.

The single loop OEO 10 can also be used for photonic signal up/down conversion, as shown in Figure 8. Such an application requires a stable optical RF local oscillation (LO) signal (i.e., an optical signal modulated at a RF frequency). The self-stabilization technique discussed above with reference to Figure 7B configures the single loop OEO to produce the required stable optical RF LO signal ($f_o$). This signal is transmitted through an optical fiber 96 to an E/O modulator 98 that modulates the signal based on a signal (IF) received from a downlink 100. The modulated signal ($f_o$ + IF) is transmitted through an optical fiber 102 to a low speed photodetector 104 that produces an electrical signal corresponding to the downlink signal (IF).

The single loop OEO can be injection locked by a remote optical signal to carry out high frequency RF carrier regeneration, amplification, and distribution, as shown in Figure 9. Laser diode 106 converts an electrical reference signal 107 from a remote source 108 to an optical signal 109. Optical signal 109 is transmitted by an optical fiber 110 to the optical input port 28 of single loop OEO 10. The oscillator is injection-locked to optical signal 109 so that the outputs of single loop OEO 10 oscillate at the frequency of, and in phase with, optical signal 109. The electrical output 34 of the single loop OEO 10 is supplied to a local user while the optical output 32 of the oscillator is redistributed to remote terminals. This capability is important in large photonic RF systems.

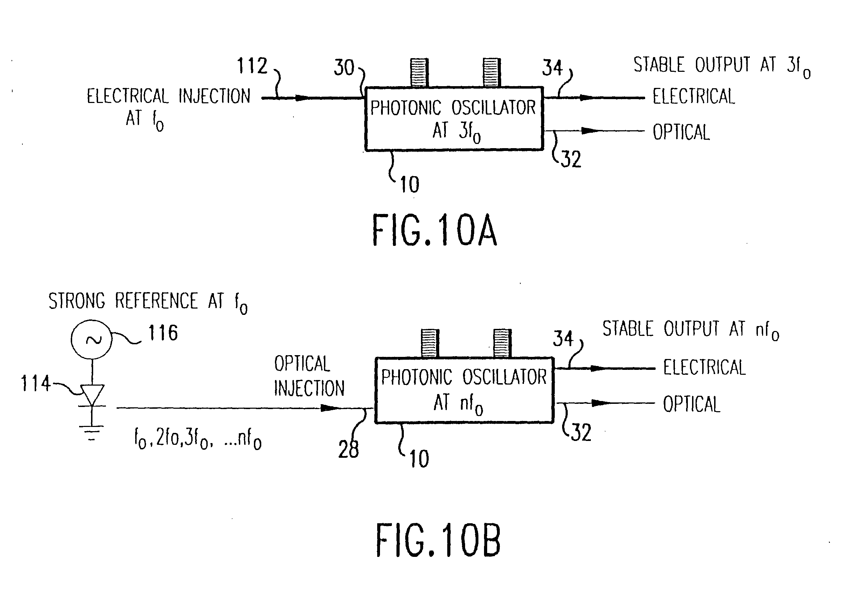

The injection locking property of the single loop OEO can also be used for high gain frequency multiplication. A first approach is shown in Figure 10A. A signal supplied to the electrical input 30 of the oscillator has a frequency $f_o$ that is a subharmonic of the frequency at which the oscillator is configured to operate (e.g., $3f_o$). The oscillator is injection-locked to the signal supplied to the electrical input 30. Due to nonlinearity of the E/O modulator 12 (Figure 1A), the oscillator produces output signals at ports 32, 34 having frequencies equal to the operating frequency of the

oscillator (i.e., $3f_o$). This is called subharmonic injection locking. Phase-locking of an oscillator operating at 300 MHz to a 100 MHz reference of 4 dBm has been achieved. The output of the oscillator is 15 dBm, resulting in a gain of 11 dB and a frequency multiplication factor of 3.

In a second approach, as illustrated in Figure 10B, the nonlinearity of a laser diode 114 is used to achieve frequency multiplication. If the laser diode 114 is biased properly and is driven hard enough, its output will contain many harmonics of the driving signal at frequency $f_o$ supplied by a driving source 116. The single loop OEO 10 is tuned to operate at a nominal frequency close to the nth harmonic ($nf_o$) of the signal driving the laser diode 114. The output of the laser diode 114 is supplied to the optical injection port 28 of the oscillator. This locks the electrical and optical outputs of the oscillator to the nth harmonic ($nf_o$). This approach offers remote frequency multiplication capability and may be useful for many photonic RF systems.

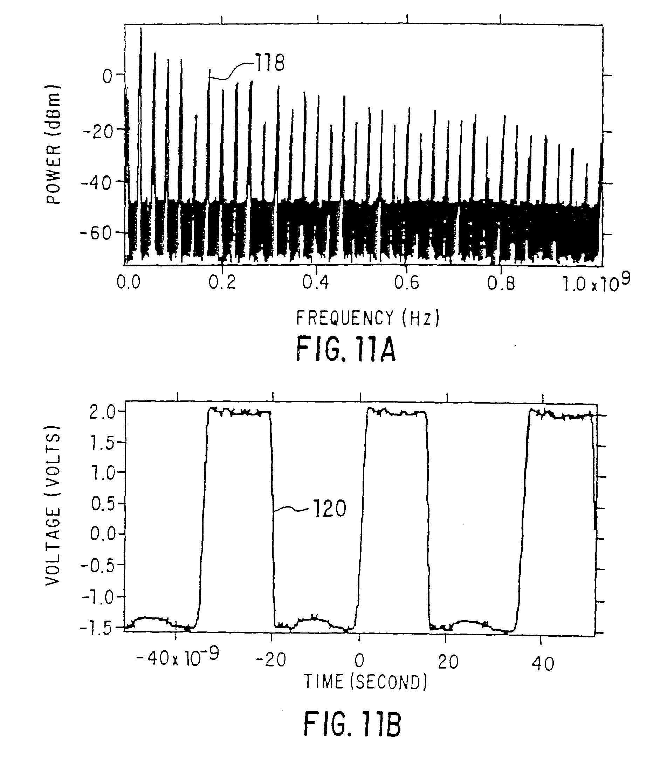

The single loop OEO can also be used to generate frequency combs and square waves, as shown in Figures 11A and 11B. For this application, the single loop OEO 10 is configured for multimode operation by eliminating the filter 22. A sinusoidal signal with a frequency equal to the mode spacing or a multiple of the mode spacing of the oscillator is injected into the oscillator. Just like laser mode-locking, this injected signal forces all modes to oscillate in phase. Consequently, as shown in Figure 11A, the oscillator produces a comb of frequencies 118 that are in phase. In the time domain, as shown in Figure 11B, the output signal corresponds to a square wave 120. When the oscillating modes of the oscillator are not mode-locked, the phase of each mode fluctuates independently, and the output of the oscillator is chaotic in the time domain.

As noted above, further noise reduction and frequency stabilization can be obtained by placing the fiber delay in a temperature controlled environment and isolating it from acoustic vibrations.

Another approach to frequency stabilization is illustrated in Figure 12. In general, with reference to Figure 1A, the frequency response of the open loop gain of an oscillator 10 is determined by the frequency responses of the modulator 12, photodetector 16, amplifier 18 and filter 22. By choosing the proper components, the open loop response 122 shown in Figure 13A can be obtained. The resulting oscillator 124 will oscillate in two modes, as shown in Figure 13B, where one of the modes 126 is at a low frequency (e.g., less than 100 MHz) and the other mode 128 is at a high frequency (e.g., 32 GHz). The oscillator is designed to generate the high frequency oscillation subcarrier.

Figure 12 shows the electrical output 34 being supplied to a low pass filter 130 that removes the high frequency component thereof and provides the low frequency component to an amplifier 132. A mixer 134 combines the output of the amplifier with a reference signal 136 operating at the frequency of the low frequency component. The result of the mixing operation is supplied to the loop length adjustment port 36 of the single loop OEO 124. Since $\Delta f/f = -\Delta L/L$, the frequency stability of the reference signal is translated to the relative loop length stability. When the loop length is stabilized, the high frequency oscillation will also be stabilized with the stability of the reference signal. Since a stable low frequency reference signal is relatively easy to generate, this method of frequency stabilization may be more attractive and practical than the injection-locking technique in some circumstances.

High speed fiber optic communication systems must have the ability to recover a clock from incoming random data. The injection locking technique described above allows the single loop OEO 10 to be used for clock and carrier recovery.

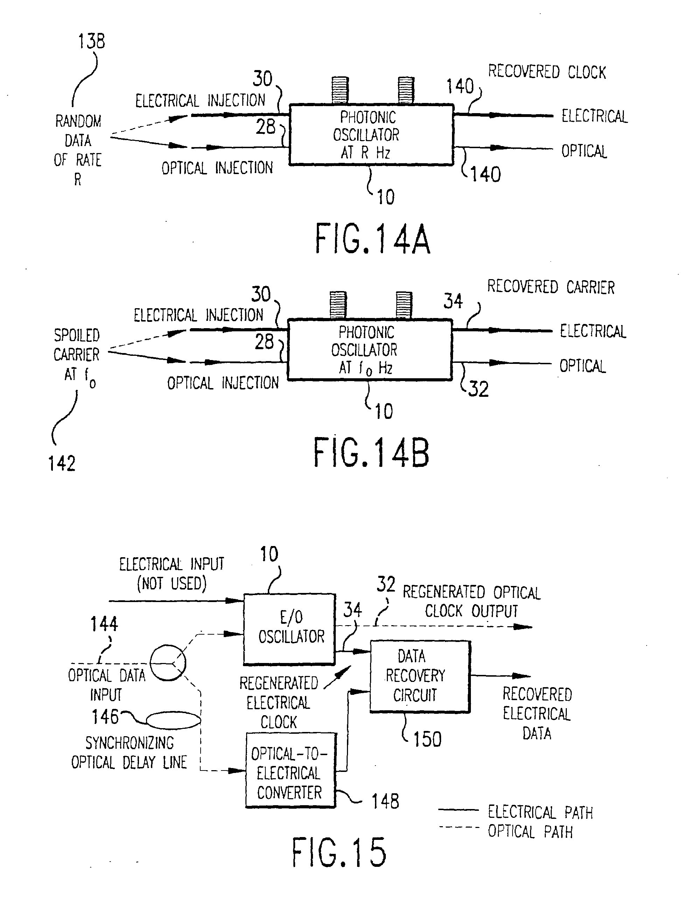

Figure 14A shows incoming random data 138 having a transmission rate R being injected into an single loop OEO 10 through either the optical input port 28 or the electrical input port 30. The free running single loop OEO 10 is tuned to oscillate in a frequency range that includes the clock frequency (R) of the incoming data. The oscillator 10 quickly phase locks to the clock frequency of the injected data stream while rejecting other frequency components (harmonics and subharmonics) associated with the data. Consequently, the output of the single loop OEO 10 is a continuous periodic wave 140 synchronized with the incoming data (i.e., the output is the recovered clock).

Clock recovery from both return-to-zero and non-return-to-zero data has been demonstrated with excellent results at 100 Mb/s and at 5 Gb/s. Data rates up to 70 Gb/s can also be recovered using the injection locking technique with an single loop OEO operating at 70 GHz. By contrast, current electronic clock recovery techniques are unable to recover clocks at even half this data rate. Another important feature of the single loop OEO technique is that the clock can be recovered directly from data as the data exits a fiber optic transmission line, without any need for optical to electrical conversion. In addition, the recovered clock signal has both optical and electrical forms and is easy to interface with a fiber optic communication system.

Figure 14B shows another approach which is similar to clock recovery. The single loop OEO can also recover a carrier buried in noise. A "spoiled" carrier 142 is injected into an single loop OEO that has a free running frequency in a range that includes the carrier and an output power level N dB higher than the carrier (where N >> 1). The injected carrier locks the single loop OEO with the carrier and results in an equivalent carrier gain of N dB in the output signal at ports 32 and 34. Because the open loop gain of the single loop OEO is only n dB (where n << N), the noise of the input is only amplified by n dB. Hence, the signal to noise ratio of the carrier is increased by ( N - n) dB.

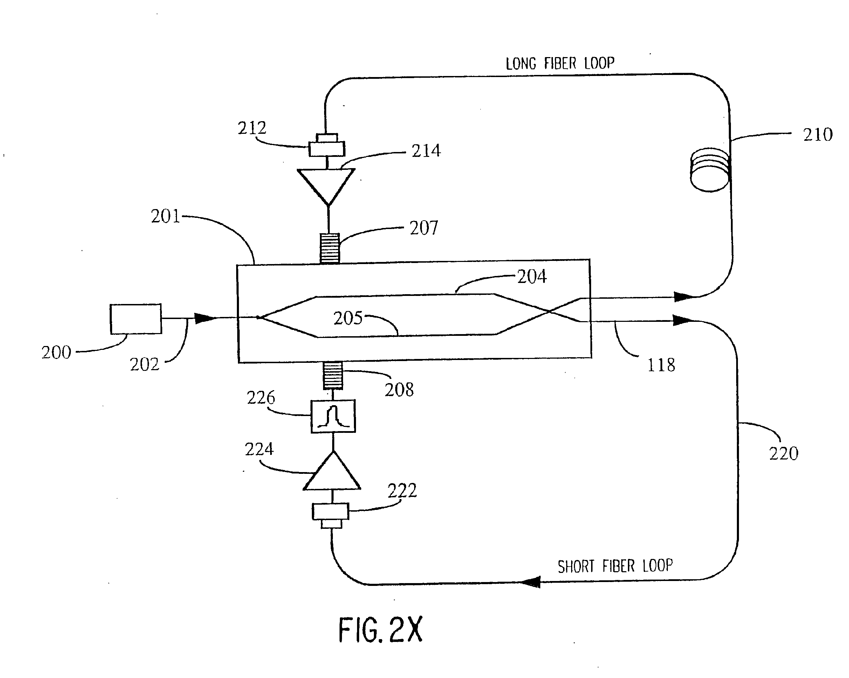

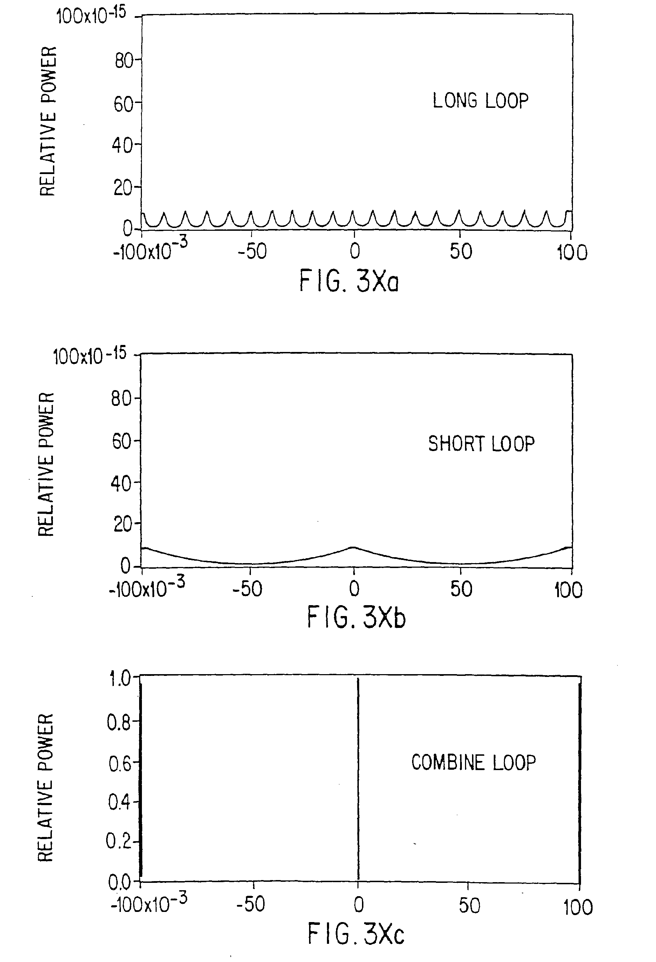

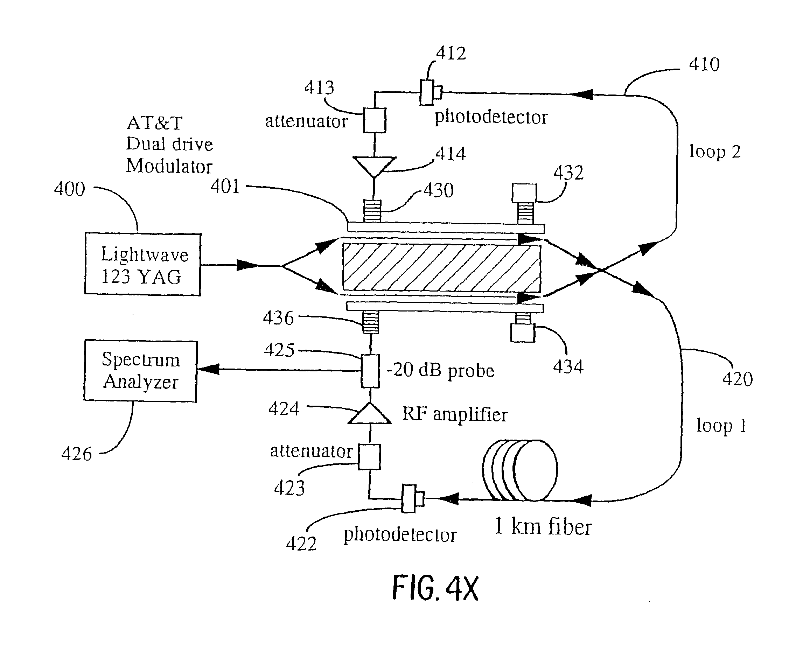

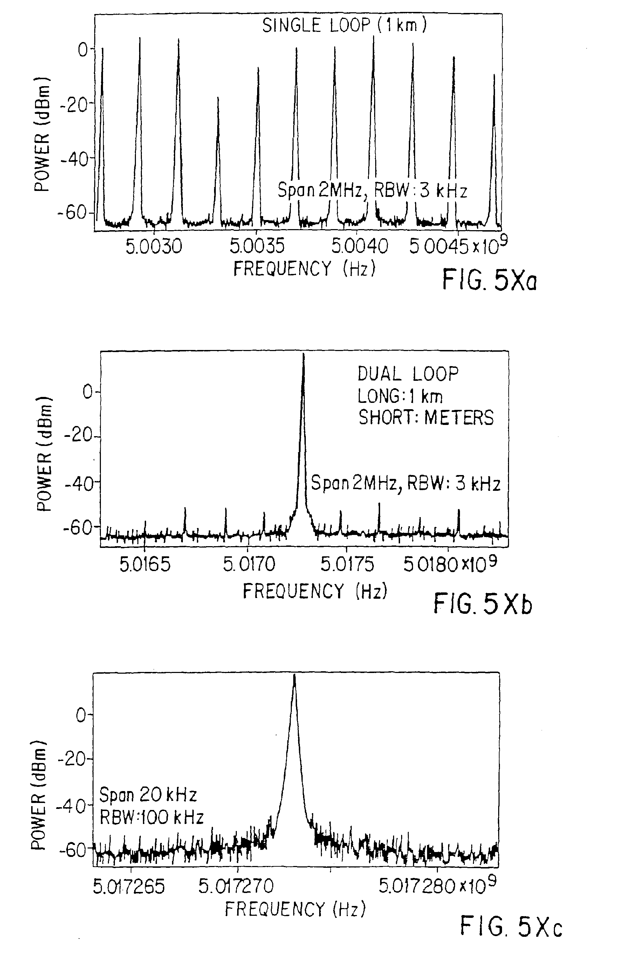

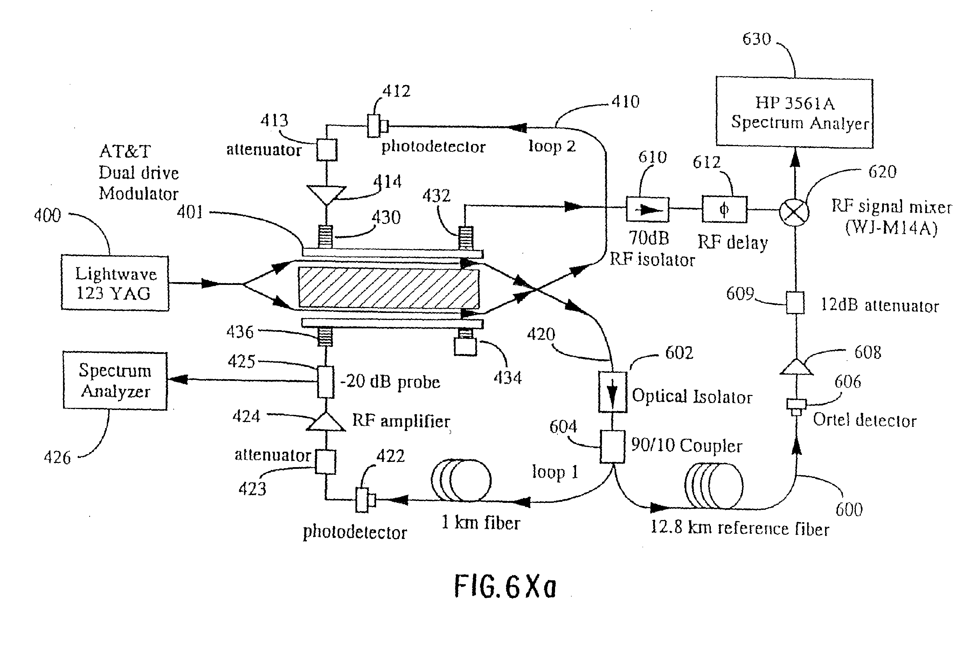

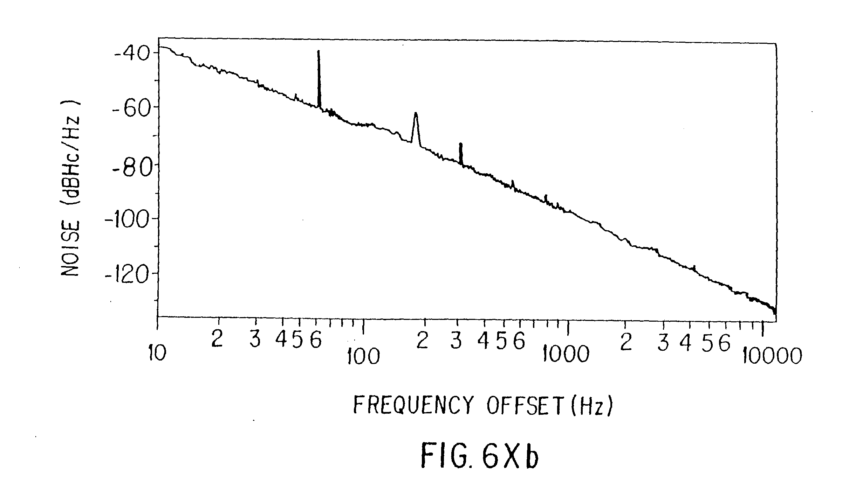

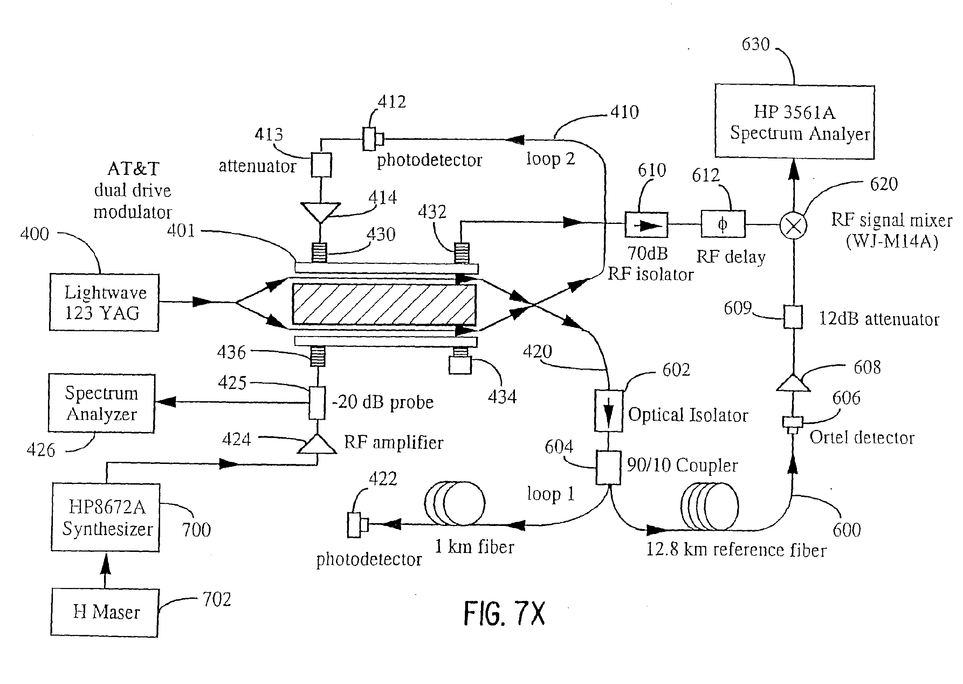

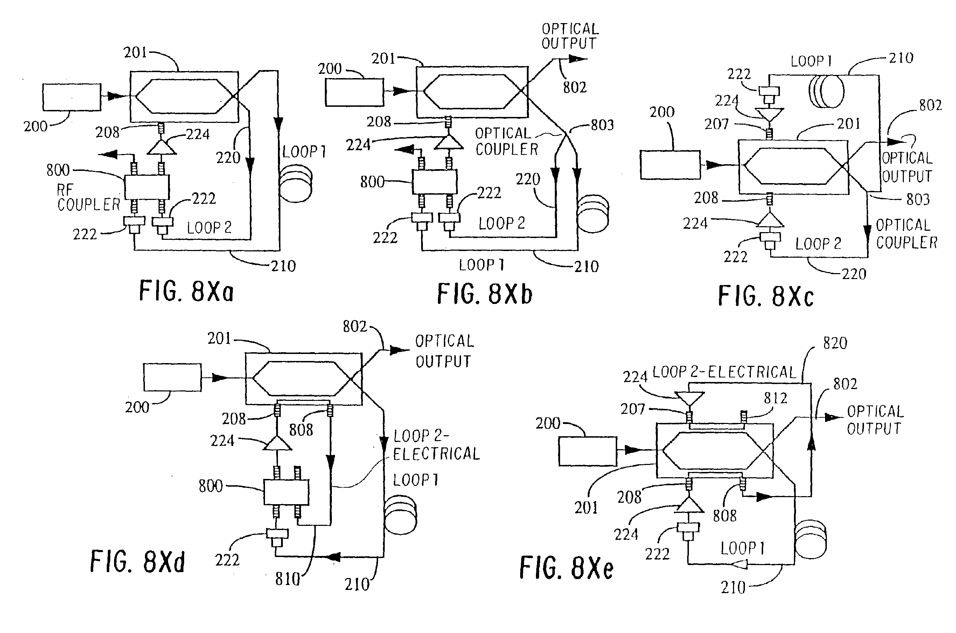

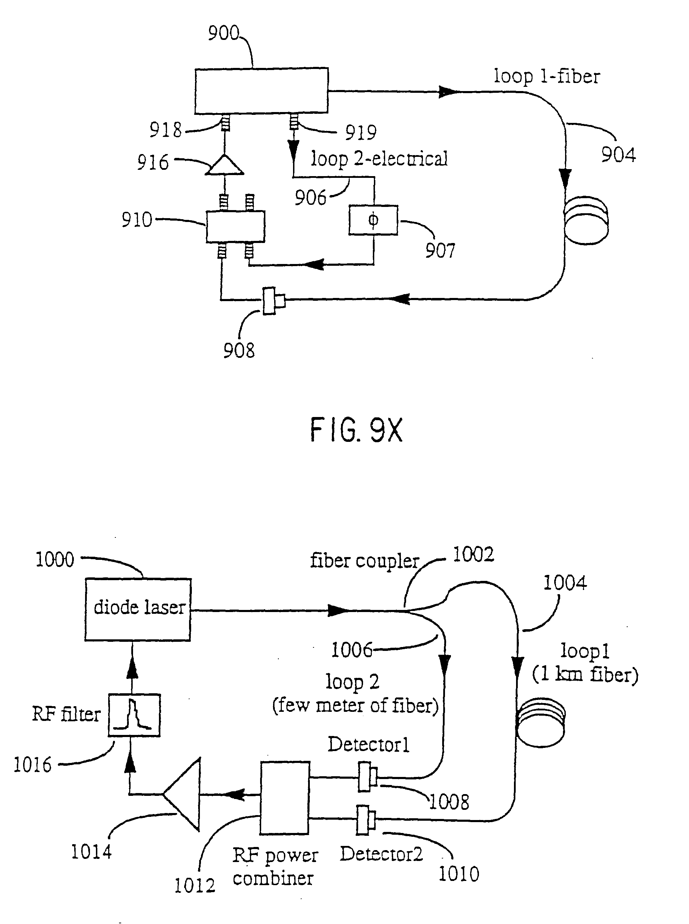

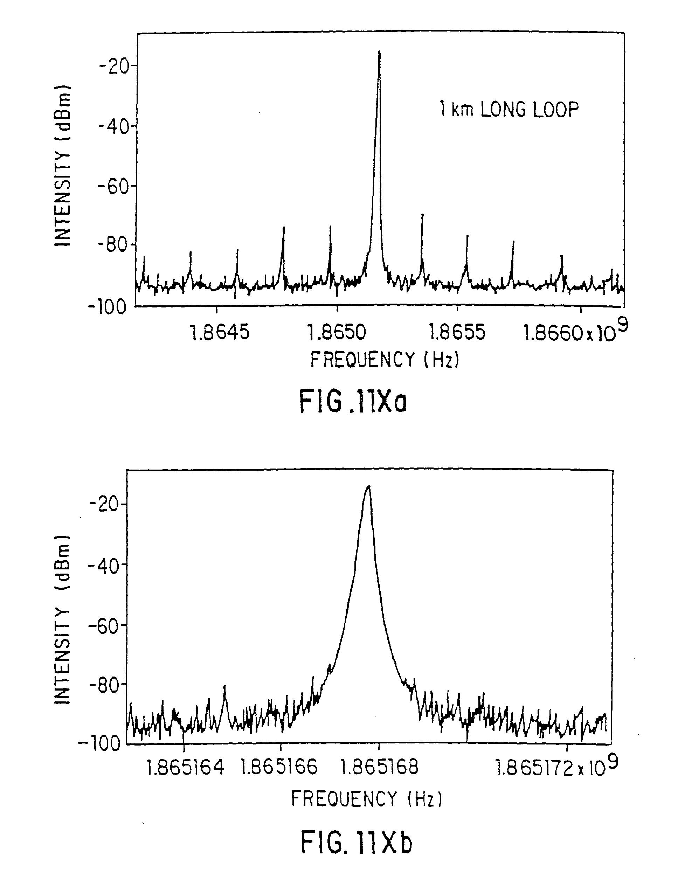

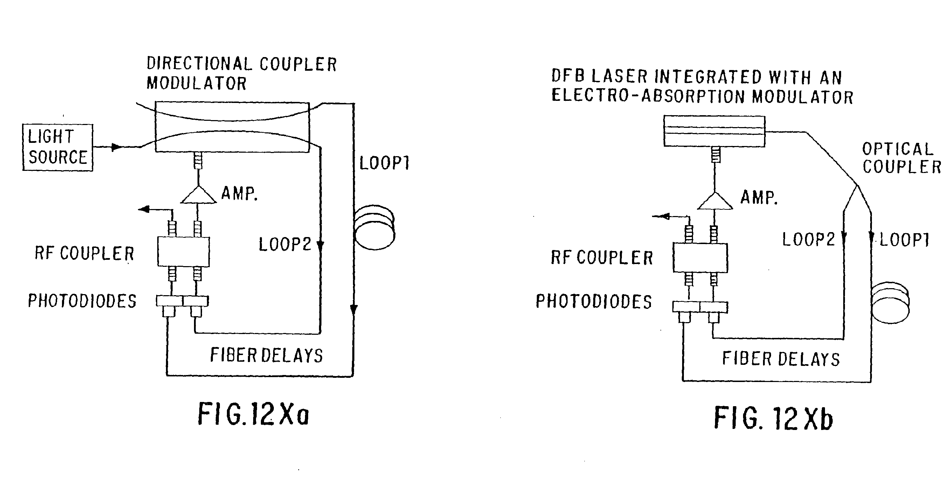

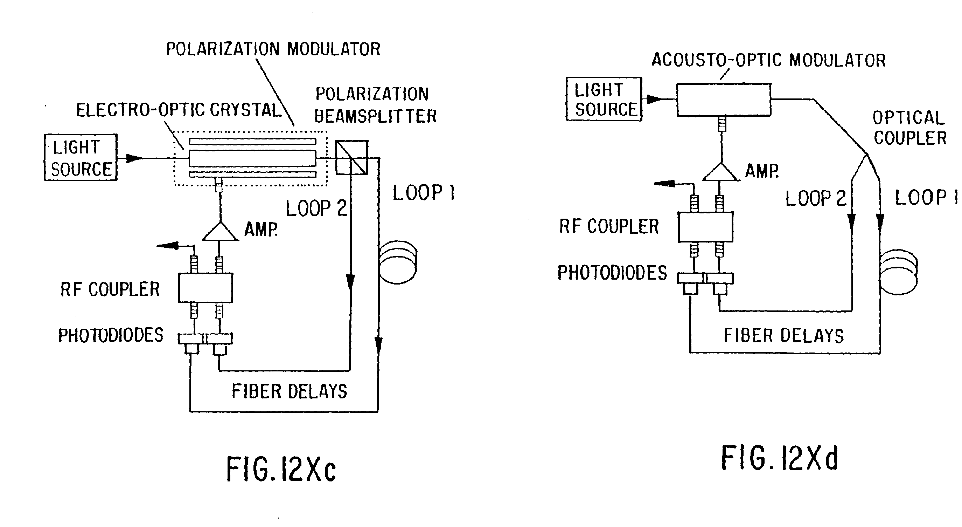

Figure 15 illustrates the flow of a clock recovery, synchronization and signal recovery system based on the recovery technique described above. An optical carrier 144 including high data rate information arrives from a remote location, and is split into two parts. One of these parts is injected into an single loop OEO 10 configured as a clock regenerator of Figure 14A. The other part is delayed in an optical delay line 146 that delays the received signal long enough for the oscillator to lock. This prevents data bits from being lost from the leading edge of the data stream. After passing through the delay line 146, the signal is applied to an optical-to-electrical converter 148 that produces an electrical signal corresponding to the delayed optical signal. This signal, along with the clock signal from the electrical output 34 of the single loop OEO, is supplied to a data recovery circuit 150 that recovers the digital data from the delayed signal. The clock signal from the optical output 32 of the oscillator can be transmitted over optical fiber of up to several kilometers in length for use by other devices. This eliminates any need for multiple clock recovery devices.

Other contemplated uses of the single loop OEO include cellular telephone antenna remoting, satellite earth station antenna remoting, and as both an optical and an electrical high frequency oscillator for signal up and down conversions. A mode-locked single loop OEO can be used as both an electrical and an optical frequency comb generator, where stable frequency comb generation is critical in dense optical and electrical frequency multiplexing systems.

An important advantage of the single loop OEO 10 is that it can be integrated on a single integrated circuit chip. All of the key components of the device, such as the laser 40, the amplifier 18, the E/O modulator 12, and the photodetector 16 can be based on GaAs technology and can be fabricated on a common substrate.

The rest portion of the specification concentrates on multiloop OEOs with reference to the figures 2X-12X. Figures 1A-15 will not be used for the following description.

The present invention further describes a multiloop OEO to generate continuously tunable, highly stable, and spectrally pure oscillations in RF and microwave spectral range. In order to illustrate the operation principles of the multiloop technique of the present invention, a dual loop OEO will be described herein with details including a theoretical postulation thereof. The dual loop OEO is only a simplified example and should not be construed to limit the scope of the present invention.

As stated previously, a long feedback loop has small mode spacing between oscillation modes therein. This is desirable in increasing the frequency tuning resolution and obtaining high spectral purity. In addition, a long feedback loop reduces the phase noise in the system. However, a OEO with a single long feedback loop requires a RF filter of narrow bandwidth to achieve single-mode oscillation. This becomes difficult as the mode spacing becomes very small. A dual loop OEO in accordance with the present invention uses an additional short feedback loop, which is phase-locked to the long feedback loop, to achieve a large mode spacing produced by the short loop while maintaining the high tuning resolution, high spectral purity, and low phase noise of the long feedback loop.

Figure 2X shows one preferred embodiment of such a dual loop OEO that uses an E/O modulator. A light beam 202 produced by a pump light source 200 is coupled into two channels 204 and 205 in an E/O modulator 201 by an input coupler 203. The two channels 204 and 205 are phase modulated and then combined and further coupled into two fiber feedback loops 210 and 220 by an output coupler 206, respectively. A photodiode 212 in the first feedback loop 210 converts the light intensity into an electrical signal which is amplified by an amplifier 214. A RF driving port 207 couples the fiber loop 210 back to the E/O modulator 201. The second feedback loop 220 is similarly constructed with inclusion of a photodiode 222 and a RF amplifier 224. The two feedback loops 210 and 220 have different delay lengths and different oscillation modes. In general, the small signal loop gain and other loop characteristics are also different in the two feedback loops.

A single mode oscillation in a dual loop OEO occurs only when the two feedback loops are in resonance with each other, including overlap of modes of the two loops and the total loop gain of the two loops exceeding unity. The phases of the two loops are preferably locked relative to each other in order to sustain a single-mode oscillation and to tune the frequency of the oscillation.

The inventors of the present invention has successfully demonstrated the invention with prototype systems which will be disclosed hereinafter. To achieve a better understanding of the underlying principles of the invention, the inventors postulates a theoretical explanation of the invention in a simplified case of dual feedback loop OEO. The concept of the dual loop theory can be expanded to further include other multiloop OEOs. The validity of the postulation should not be bounded to the embodiments and their ramifications of the present invention. A detailed account of the postulation is described as follows.

For a single-loop OEO as described thereabove, a quasi-linear theoretical model is developed to account for the oscillator dynamics and the noise with inclusion of a RF filter in the closed feedback loop. The present theory for a dual-loop OEO will adapt a similar quasi-linear approach.

It is assumed that the E/O modulator is a Mach-Zehnder type to simplify the discussion herein. This assumption by no means limits the generality of the theory. OEOs using other type of E/O modulators can be similarly analyzed. For a OEO of either single-loop or multiloop, the conditions for self sustained oscillations include coherent addition of partial waves each wave around the loop and a total loop gain exceeding losses for the circulation waves in the loop. For a single loop OEO, the possible oscillation frequencies are those that add up in phase after each round trip around the loop and that have a net round-trip gain larger than unity. Let be the total group delay time of the loop and $G(V_{osc})$

be the total open loop voltage gain as a function of oscillation voltage amplitude $V_{osc}$, respectively. For the case that the gain $G(V_{osc})$ is negative, the possible oscillation frequencies are:

$$f_k = (k + \frac{1}{2})\frac{1}{\tau} \, , \tag{21}$$

where k is an integer. If the gain is positive, the allowable oscillation frequencies are given by:

$$f_k = \frac{k}{\tau}. \tag{23}$$

In a dual loop OEO, there are two feedback loops of different lengths. The open loop gain of each loop is less than unity, however, the combined open loop gain of both loops is larger than unity. The possible oscillation frequencies must add up in phase after each round trip for both loops. For a negative gain $G(V_{OSC}) < 0$, the allowable oscillation frequencies are:

$$f_{OSC} = (k + \frac{1}{2})\frac{1}{\tau_1} = (m + \frac{1}{2})\frac{1}{\tau_2} \, , \tag{24}$$

where $m$ is an integer, and $t_1$ and $t_2$ are the loop delays of loop 1 and loop 2, respectively. The allowable oscillation frequencies for a positive gain $G(V_{OSC}) > 0$, are:

$$f_{OSC} = \frac{k}{\tau_1} = \frac{m}{\tau_2} \, . \tag{25}$$

From Eq. (24) and Eq. (25) one can see that if loop 2 is $n$ times shorter than loop 1,

$$\tau_1 = n\tau_2, \tag{26}$$

then $n$ must be an odd integer for $G(V_{OSC}) < 0$ and an integer for the case $G(V_{OSC}) > 0$. The mode spacing D$f$ is then dictated by the delay time of loop 2 with shorter delay length:

$$\Delta f = \frac{1}{\tau_2} \, . \tag{27}$$

Thus, a large mode spacing can be achieved by using one short loop in a multiloop OEO.

On the other hand, the phase noise of the oscillator is dictated by the longer loop which has larger cavity quality factor or Q-factor, resulting in an oscillator having large mode spacing and low phase noise.

The RF spectrum of the dual loop OEO can be analyzed using the same quasi-linear theory developed for the single-loop OEO. The recursive relation for the dual loop oscillator can be expressed as:

$$V_j(\omega) = (g_1 e^{i\omega\tau_1} + g_2 e^{i\omega\tau_2})V_{j-1}(\omega), \tag{28}$$

where $V_j(w)$ is the complex amplitude of the circulating field after a round trip, $g_1$ is the complex gain of loop 1 and $g_2$ is the complex gain of loop 2. The total field of all circulating fields is thus expressed as the following:

$$V_{out}(\omega) = \sum_{j=0}^{\infty} (g_1 e^{i\omega\tau_1} + g_2 e^{i\omega\tau_2})^j V_j(\omega) = \frac{V_o}{1 - (g_1 e^{i\omega\tau_1} + g_2 e^{i\omega\tau_2})} \, . \tag{29}$$

The corresponding RF power is therefore derived from Eq. (29):

$$P(\omega) = \frac{1}{2R} \, |V_{out}(\omega)|^2$$

$$= \frac{|V_o|^2/2R}{1+|g_1|^2+|g_2|^2+2|g_1||g_2|\cos\Phi_{12}(\omega) - 2|g_1|\cos\Phi_1(\omega) - 2|g_2|\cos\Phi_2(\omega)} \quad (30)$$

where

$$\Phi_i(\omega) = \omega\tau_i + \phi_i \tag{31}$$

$$\Phi_{12}(\omega) = \Phi_1(\omega) - \Phi_2(\omega). \tag{32}$$

In Eq. (31), $f_i$ is the phase factor of the complex gain $g_i$ ($i$=1,2).

If the gain of each loop is less than unity, no oscillation may start independently in either loop. However, for the frequency components satisfying Eqs. (24) and (25), oscillation can start collectively in the two loops. When Eqs. (24) and (25) are satisfied, we have

$$\Phi_1(\omega) = 2k\pi, \tag{33}$$

and

$$\Phi_2(\omega) = 2m\pi, \tag{34}$$

$$\Phi_{12}(\omega) = \Phi_1(\omega) - \Phi_2(\omega) = 2(k-m)\pi. \tag{35}$$

Substitution of Eqs. (33), 34), and (35) in Eq. (30) yields:

$$P(\omega) = \frac{|V_o|^2/2R}{1+|g_1|^2+|g_2|^2+2|g_1||g_2|-2|g_1|-2|g_2|} . \tag{36}$$

In order for the oscillation to start from noise, we must have:

$$1+|g_1|^2+|g_2|^2+2|g_1||g_2|-2|g_1|-2|g_2|=0. \tag{37}$$

If the complex loop gains have the same amplitude, the following is readily derived from Eq. (37):

$$|g_1|=|g_2|=0.5. \tag{38}$$

This is the oscillation threshold for the dual loop OEO. If initially the small signal gain in each loop is larger than 0.5, the nonlinearity of the E/O modulator or the amplifier will bring the gain to 0.5 after the oscillation is started and stabilized.

Figure 3X shows the calculated frequency spectrum of the dual loop OEO from Eq. (30). In the calculation, we chose the following parameters:

$$\tau_1 = 0.1 \mu s, \qquad (39)$$

$$\tau_2 = 10\tau_1 = 1 \mu s, \qquad (40)$$

$$|V_o|^2/2R = 1, \qquad (41)$$

$$|g_1| = |g_2| = 0.499999999. \qquad (42)$$

Figure 3Xa shows the power spectrum when only the loop 2 with longer delay is in operation. Figure 3Xb is the power spectrum of loop 1 of shorter delay alone in operation. Figure 3Xc is the power spectrum of the OEO with both loops in operation. The relative power of the vertical axis in each graph is the calculated power of each case divided by the calculated peak power of the dual loop OEO. Note that the relative power for Figure 3Xa and Figure 3Xb are extremely low, due to the fact that the loop gain is too small for each loop to oscillate individually. For the dual loop case of the Figure 2Xc, strong oscillation at selected frequencies is evident, with the mode spacing determined by loop 1 with shorter delay and spectral width of each resonance peak determined by loop 2 with longer delay. The existence of loop 2 of shorter delay suppresses modes of loop 1 of longer delay. Only the modes of loop 1 that are in synchronization with the modes of loop 2 in frequency domain will oscillate.

Single mode operation of the dual loop OEO can be achieved by including a RF filter of relative wide bandwidth in either loop. For example, a RF filter 226 can be inserted in the short loop for this purpose as shown in Figure 2X. A mode that is closest to the transmission peak of the RF filter 226 will be selected to oscillate and other modes will be suppressed.

Frequency tuning of the dual loop OEO is accomplished by tuning multiple devices including the RF filter 226, the short loop 220, the long loop 210, and the driving voltage signals for the E/O modulator 201. The two feedback loops are phase locked to each other. Any change in oscillation frequency in one loop is reflected in an equal change in another loop.

A change D$f$ in oscillation frequency $f$ is proportional to a change D$L$ in the corresponding loop length $L$, i.e.,

$$\frac{\Delta f}{f} = -\frac{\Delta L}{L} \ . \qquad (43)$$

Therefore, a fine tuning in oscillation frequency of a dual loop OEO is done by changing the delay length of the long loop 210. This can be done in several ways including use of a RF line stretcher or a fiber stretcher in the long loop 210. A RF line stretcher can be inserted in the electrical portion of the long feedback loop 210. For example, it is connected between the RF amplifier 214 and the RF driving port 207 to change the delay of the loop 210. A fiber stretcher can be placed in the fiber portion of the long loop 210 to physically stretch the length of the fiber so that the delay of the fiber loop is changed.

The mid-range tuning is done with the short loop 220 with a tuning resolution of the mode spacing of the long loop 210. As with the fine tuning, a RF line stretcher or a fiber stretcher can be used for mid-range tuning. The continuous tuning range of the dual loop OEO is determined by the mode spacing of the short loop 220. For example, if the short loop 220 is 20 cm and the long loop 210 is 10 km, the tuning range will be 1GHz and the tuning resolution with the short loop 220 will be 20 kHz.

For a even larger tuning range, a tunable RF filter can be used in either feedback loop. In addition, a biasing voltage to either RF driving ports 207 and 208 can be used for fine frequency tuning. All tuning devices must be synchronized to avoid mode hopping. The tuning of the RF filter and the short loop 220 is synchronized to avoid mode hopping of oscillation modes of the short loop 220 and the tuning of the short loop 220 and the long loop 210 is synchronized to avoid mode hopping of oscillation modes of the long loop 210.

Additional devices can be implemented to eliminate mode hopping.

Other elements in the dual loop OEO may also affect the frequency characteristic and tunability of the system including spectral characteristic of the E/O modulator and photodetector. The combination of the dual loop OEO and the tunable RF filter produces a novel frequency synthesizer with wide frequency tuning range (tens of GHz), low phase noise, and high frequency resolution.

The E/O modulator 201 is preferably of the well-known Mach-Zehnder type that modulates light intensity by phase modulation. Other types of modulators can also be used in accordance with the present invention, including but are not limited to, electro-absorption modulator including a quantum-well modulator, a directional coupler modulator, a polarization modulator, and an acoustic-optic modulator.

Prototypes of the present invention are described in the rest of this disclosure. These prototypes were built to demonstrate the functionability and capability of the invention. The performance of the prototype systems is highly dependent on the particular components and devices that were available at the time of test. One skilled in the art in which the present invention pertains should understand that the particularities of the components and devices used in the prototype systems and the tested results do not limit the content and scope of the invention but rather provide a demonstration of the invention.

Figure 4X is an experimental setup of a dual loop OEO similar to the system shown in Figure 2X. The pump light source 400 was a single-mode diode-pumped YAG laser at 1.32mm by Lightwave Electronics (Lightwave 123 YAG). A dual drive electro-optic modulator 401 made by AT&T was used. The shorter loop 410 includes a photodetector 412 from Hughes Research Lab, a 7dB attenuator 413, and an RF amplifier 414 by Avantek (AFT-12634). The longer loop 420 includes a Lasertron photodetector 422, a 6dB attenuator 423, and Celeritek amplifier 424 (CSA-903396). The attenuators in the feedback loops are used to adjust the gain in each loop. The fiber in the long loop 420 is about 1Km long and the fiber in the short loop 410 is a few meters long, respectively. A spectrum analyzer 525 is connected to a 20dB probe at the output port of the RF amplifier 424 in the short loop 420. This allows measurements of the power spectrum of the dual loop OEO. The E/O modulator 401 has two RF input ports 430 and 436 and two RF output ports 432 and 434. The two output ports 432 and 434 are terminated to minimize reflective interference. As described previously, frequency tuning can be implemented in the dual loop OEO of Figure 4X with a broadband RF filter, RF line stretchers or fiber stretchers.

Figure 5X shows the measurements of the power spectrum of the system in Figure 4X. Figure 5Xa shows the multimode oscillation of a single loop OEO in which the shorter loop 410 is disconnected, however the longer loop 420 is closed and its open loop gain is larger than unity. Figure 5Xb shows the single mode oscillation of a dual loop OEO in which both loops 410 and 420 were closed and the gain of each loop was adjusted by inserting attenuators of proper values so that they were just below the oscillation threshold in each loop. However, the combined loop gain for a particular oscillation mode was larger than unity and the oscillation thereof is established in the system. It is evident from Figure 5Xb that the presence of the shorter loop 410 effectively selects one mode of the longer loop 420 to oscillate and suppresses other modes thereof. The mode suppression ratio was measured to be more than 60 dB. Figure 5Xc shows the spectral profile of a resonance peak of the single mode oscillation of the dual loop OEO. The frequency span and the resolution bandwidth of each figure are labeled.

Notably, an additional advantage of the dual loop configuration in Figure 4X is that, at a fixed optical pump power, the second loop increases the open loop gain by 6 dB and hence reduces the oscillation threshold by 6 dB. This is because that the RF signals from both loops are used to modulate both optical channels 204 and 205 of the E/O modulator.

The inventors also devised an experiment to measure the phase noise of the dual loop OEO with a frequency discriminator method. The experimental setup is shown in Figure 6Xa. Two additional RF channels were used to form the two interference channels for the measurements. A reference fiber 600 of about 12.8km long couples about a small fraction of the optical energy from the long loop 420 (e.g., 10%) by a fiber coupler 604. An optical isolator 602 was used to minimize any optical feedback. The optical signal from the reference fiber 600 was converted into a RF signal by a photodetector 606 and sent to a RF signal combiner 620 via a RF amplifier 608 and a RF attenuator 609. The second RF channel is obtained by using the RF signal from the output port 432. A RF isolator 610 with 70dB of power attenuation was used to minimize any feedback to the E/O modulator 401. The two RF signals were mixed at the RF signal mixer 620 and the combined signal was measured by a spectrum analyzer 630. Both the loop fiber and the reference fiber are acoustically isolated in a box padded with lead-backed foam. Spectrum analyzer 426 was used to monitor the RF oscillation in the dual loop OEO. Figure 6Xb shows the measured phase noise as a function of the offset frequency. It should be noticed that at 10 kHz from the carrier (about 5GHz), the phase noise of the dual loop OEO is -132dBc/Hz, more than 10 dB lover than the phase noise of a best quartz oscillator multiplied to 5GHz.

As a comparison, the inventors also measured the phase noise of a high performance HP frequency synthesizer HP8672A using the same frequency discriminator method. The experimental setup is shown in Figure 7X. The long fiber loop 420 of Figure 6XA is replaced with the HP frequency synthesizer (HP8672A) 700 that is locked to a hydrogen maser 702 for long-term stability. The RF signal and the feedback RF signal from the short fiber loop 410 modulated the two optical channels, respectively. The spectrum analyzer 630 was used to measure phase noise with a frequency discriminator technique. The measurements show that the synthesizer's phase noise at 10 kHz away from the 5GHz carrier is -97 dBC/Hz which is more than 30 dB higher than that of the dual loop OEO in Figure 6XA. The fact that this phase noise level is consistent with the data supplied by the manufacturer confirms the validity of the experiment setup.

Various configurations of multiloop OEO are contemplated by the inventors. Five examples of such dual loop OEO are shown in Figure BX. The dual feedback loops can be both optical, or one electrical and another one optical. Figure 8X(a) shows a dual loop OEO with dual optical fiber loops. The optical signals in both fiber loops are converted into RF signals by two photodiodes 222. Next the RF signals of the two loops are coupled together by a RF coupler 800. The coupled RF signal is fed back to the E/O modulator 201. Figure 8X(b) shows a dual loop OEO using dual optical feedback loops that implements an optical output 802. The optical output 802 is from one optical output channel of the E/O modulator 201. The other optical output channel 804 is split into two fiber loops 210 and 220 by an optical coupler 803. Figure 8X(c) shows a simpler dual loop OEO having an optical output 802. An electrical RF output can be easily implemented in these embodiments by using a RF coupler in either loop, e.g., between the RF amplifier 224 and the RF input port 208. The RF coupler can also be used for electrical RF injection. Similarly, an optical fiber coupler can be used in either fiber loop to implement an optical output or optical injection.

Figures 8(d) and 8(e) show "hybrid" dual loop OEOs that use one optical feedback loop and one electrical feedback loop. One optical output channel 802 of the E/O modulator 201 is used as the optical output and the other channel is used to form the optical fiber loop as the first feedback loop. The second feedback loop is an electrical loop which is formed by sending a portion of the electrical feedback signal to the driving port 208 of the E/O modulator 201 to an electrical delay line 810. In Figure 8X(d), the RF signal from the electrical delay line 810 is coupled with the RF signal from the long optical fiber loop 210 using a RF coupler 800. The coupled RF signal from the RF coupler 800 is then fed back to the E/O modulator 201. In Figure 8X(e), the RF signal from the electrical delay line 810 is directly sent to one RF driving port 812 of the E/O modulator 201 for modulating one optical path 820. The RF signal from the long optical loop 210 is sent to another RF driving port 208 for modulating another optical path 830. The electrical and optical feedback loops interact with each other at the optical output coupler 840 in the E/O modulator 201. As mentioned earlier, electrical RF output/injection and optical output/injection can be implemented with a RF coupler and optical fiber coupler, respectively. Frequency tuning can be done with a broadband RF filter, RF line stretchers or fiber stretchers.

Other types of multiloop OEOs are contemplated by the inventors. In the previous embodiments of the present invention, an E/O modulator is the main component for implementing light modulation and signal feedback. One alternative way is to directly send the feedback signals to the pump light source and modulate the output intensity thereof. Figure 9X illustrates one embodiment of the such multiloop OEO in a dual loop configuration. An optical coupler 902 couples the output beam from a light source 900 into a long fiber loop 904. A photodiode 908 converts the optical signal into electrical signal. A short delay loop is formed by an electrical delay line 906. A portion of the RF feedback signal to the driving port 918 is sent to an electrical output port 919. A RF combiner 910 couples the RF signals from the two loops together. The coupled RF signal is fed to the light source 900 to modulate the driving current thereof and thereby to modulate the output light intensity.

Another embodiment of directly modulated dual loop OEO is shown in Figure 10X. A single-mode distributed feedback (DFB) diode laser 1000 is used as the pump laser. A fiber coupler 1002 couples the output laser beam into a long fiber loop 1004 and a short fiber loop 1006. Two photodetectors 1008 and 1010 converts optical signals into electrical signals. A RF power combiner 1012 couples the RF signals from the two fiber loops together. The combined RF signal is amplified by a RF amplifier 1014, filtered by a RF narrow band filter 1016, and fed to the DFB laser 1000. The inventors successfully demonstrated a dual loop OEO as shown in Figure 10X. The fiber coupler 1002 was a 50/50 coupler. The long loop 1004 was 1 km and the short loop 1006 was a few meters, respectively. The spectral measurements of the DFB laser are shown in Figure 11X. The measurements were taken at the output of the amplifier 1041. Figure 11Xa shows the power spectrum of the DFB laser 1000 with a display frequency span of 2MHz and a resolution bandwidth of 3KHz. It is evident again that a great modal suppression was achieved using the dual loop technique of the present invention. Figure 11Xb shows the spectral detail of the oscillating mode 1110 with a display frequency span of 10KHz and a resolution bandwidth of 100Hz.

One unique aspect of the multiloop OEO in the present invention is that oscillation can be achieved without power amplification. This allows elimination of an amplifier in the system. This feature of the invention further reduces the system noise by eliminating 1/f noise and white noise introduced by an amplifier and can minimize the power consumption by the system. As stated therebefore, the requirement for oscillation is that the total open-loop gain of the system exceeds one. Therefore, the open-loop gain in each of the multiple loops can be smaller than one while the oscillation still sustains in the multiloop OEO. This reduces the minimum power requirement in the signal in each feedback loop for achieving oscillation in the overall system. For an optical loop in the multiloop OEO, this reduces the required input optical power and the power handling capability of the photodiode therein. In operation, a minimum optical input power into the multiple optical feedback loops is required in order to sustain an oscillation without power amplification. The inventors of the present invention has demonstrated oscillation without power amplification in a dual loop OEO using two optical fiber loops.

The present invention as described thereabove in various embodiments employs at least one optical fiber feedback loop in a multiloop OEO configuration to achieve a continuously tunable RF oscillation. The disclosed system

EP 1 600 806 A2

in accordance with the present invention has significant advantages over many other oscillators, in particular, in terms of versatility of its applications and in frequency tunability. In comparison with a single-loop OEO, the multiloop OEO of the present invention further reduces the phase noise by implementing at least one additional long fiber feedback loop. The multiloop OEO has wider frequency tunability and narrower spectral linewidth than that of the single-loop OEO. Furthermore, the multiloop OEO is more flexible and versatile than the single-loop OEO in that electrical feedback loop can be implemented in additional to external electrical injection.

Although the present invention has been described in detail with reference to a number of particular embodiments, one ordinarily skilled in the art to which this invention pertains will appreciate that various modifications and enhancements may be made without departing from the spirit and scope of the present invention.

For example, although the embodiments regarding multiloop OEO disclosed hereabove are dual loop oscillators, the principles embodies therein apply to a OEO with more than two loops as clearly stated earlier. In particular, more feedback loops may further improve the performance of the dual loop OEO including narrower spectral width and better frequency tunability.

The frequency characteristics of the OEO can be modified by changing the delay times with variable optical delay devices and/or variable electrical delay devices. One example of variable optical delay devices is a fiber stretcher which changes the length of a fiber to change the delay time. A RF line stretcher is an example for variable electrical delay devices.

Electrical signal couplers and optical couplers can be used in the OEO system to generate electrical and optical signal outputs or to inject external electrical and optical signals into the system. This allows the present invention to be implemented in a wide range of applications.

In addition, other optical delay methods other than optical fibers as used in the preferred embodiments can be used in accordance with the present invention. A variety of light sources can be used in accordance with the present invention such as light-emitting diodes (LEDs), LED arrays, diode lasers, diode laser arrays, diode laser pumped solid-state lasers including diode-pumped fiber lasers. Furthermore, many modulation schemes can be used in a multiloop OEO in accordance with the present invention. Figure 12X depicts some examples of dual loop OEOs using different optical modulators.

All these and other modifications are intended to be encompassed within the claims.

Other aspects of the invention forming part of this disclosure include the following.

A first aspect comprises a single loop OEO comprising:

an electro-optical modulator having an electrical input port that accepts an electrical control signal and an optical output port, wherein the electro-optical modulator is operable to generate at the optical output port an optical signal that oscillates at a frequency related to the electrical control signal;

a photodetector operable to convert a portion of the optical signal from the optical output port of the electro-optical modulator to an electrical signal and to provide the electrical signal to the electrical input port of the electro-optical modulator as the electrical control signal; and

elements forming a feedback loop connecting the optical output port, the photodetector and the electrical input port, said feedback loop having an open loop gain which is greater than one.

A second aspect comprises the single loop OEO of the first aspect wherein the electro-optical modulator further comprises an electrical bias port and the frequency at which the optical output signal oscillates is affected by a voltage applied to the bias port.

A third aspect comprises the single loop OEO of the first aspect, further comprising an optical fiber operable to receive the portion of the optical output signal and to transport said portion to the photodetector.

A fourth aspect comprises the single loop OEO of the third aspect, further comprising a fiber stretcher coupled to the optical fiber, wherein the fiber stretcher includes an electrical input port and is operable to modify a length of the optical fiber in response to a signal applied to the electrical input port.

A fifth aspect comprises the single loop OEO of the fourth aspect, wherein the single loop OEO is configured so that the output signal oscillates at a higher frequency and a lower frequency, the oscillator further comprising a feedback loop operable to combine a low frequency portion of the output signal with a low frequency reference signal to produce a combined electrical signal, and applies the combined electrical signal to the electrical input port of the fiber stretcher.

A sixth aspect of the single loop OEO of the fifth aspect, wherein the oscillator produces an electrical-output signal at an electrical output that oscillates in-phase and at the same frequency as the optical output signal, and wherein the feedback loop includes:

a low pass filter connected to the electrical output and operable to produce a filtered electrical signal from which a high frequency component of the electrical output signal has been removed;

18

an amplifier connected to an output of the low pass filter and operable to produce an amplified filtered electrical signal;

a combiner having a first input port connected to an output of the amplifier, a second input port for receiving the low frequency reference signal, and an output port for producing the combined electrical signal.

A seventh aspect comprises the single loop OEO of the first aspect, further comprising an RF coupler operable to receive the electrical signal produced by the photodetector and to produce an electrical output signal from the received electrical signal.

An eighth aspect comprises the single loop OEO of the seventh aspect, further comprising an optical coupler operable to combine an external optical control signal with the portion of the optical output signal to produce a combined optical signal, and wherein the photodetector is operable to convert the combined optical signal to an electrical signal and to supply the electrical signal to the electrical input port of the electro-optical modulator as the electrical control signal.

A ninth aspect comprises the single loop OEO of the eighth aspect, wherein the RF coupler is further operable to combine an external electrical control signal with the electrical signal produced by the photodetector to produce a combined electrical signal, to supply the combined electrical signal as the electrical output signal, and to supply the combined electrical signal to the electrical input port of the electro-optical modulator as the electrical control signal.

A tenth aspect comprises the single loop OEO of the ninth aspect, wherein the electro-optical modulator further comprises an electrical bias port and the frequency at which the optical output signal oscillates is affected by a voltage applied to the bias port.

An eleventh aspect comprises the single loop OEO of the tenth aspect, further comprising an optical fiber operable to receive the portion of the optical output signal and to transport it to the photodetector.

A twelfth aspect comprises the single loop OEO of the eleventh aspect, further comprising a fiber stretcher coupled to the optical fiber, wherein the fiber stretcher includes an electrical input port and is operable to modify a length of the optical fiber in response to a signal applied to the electrical input port.

A thirteenth aspect comprises the single loop OEO of the twelfth aspect, further comprising an RF amplifier operable to amplify the electrical signal produced by the photodetector to produce an amplified electrical signal, and to supply the amplified electrical signal to the RF coupler.

A fourteenth aspect of the single loop OEO of the thirteenth aspect, further comprising a band pass filter operable to produce a filtered electrical signal from the combined electrical signal produced by the RF coupler and to supply the filtered electrical signal to the electrical input port of the electro-optical modulator as the electrical control signal.

A fifteenth aspect comprises the single loop OEO of the eighth aspect, further comprising:

a remote source of an electrical reference signal;

a laser diode operable to convert the electrical reference signal to an optical reference signal; and

an optical fiber operable to supply the optical reference signal to the optical coupler as the external optical control signal.

A sixteenth aspect comprises the single loop OEO of the fifteenth aspect, wherein:

the remote source is operable to produce the electrical reference signal at a first frequency and at a power sufficient to cause the laser diode to produce harmonics of the first frequency in the optical reference signal; and

the single loop OEO is configured to oscillate in a frequency range that includes a second frequency that is an integer multiple of the first frequency so that the optical reference signal causes the output signal to oscillate at the second frequency.

A seventeenth aspect comprises the single loop OEO of the eighth aspect, wherein:

the external optical control signal comprises a stream of digital data at a clock rate having a first frequency; and

the single loop OEO is configured to oscillate in a frequency range that includes the first frequency so that the external optical control signal causes the output signal to oscillate at the first frequency and thereby causes the single loop OEO to extract a clock signal from the stream of data.

An eighteenth aspect comprises a data recovery system including the single loop OEO of the seventeenth aspect, and further comprising:

an optical delay line operable to delay the stream of digital data for a time sufficient to permit the single loop OEO to extract the clock signal from the stream of data;
an optical-to-electrical converter operable to convert the delayed stream of digital data to an electrical data stream; and
a data recovery circuit operable to receive the electrical output signal of the single loop OEO and the electrical data stream and to produce digital data therefrom.

A nineteenth aspect comprises the single loop OEO of the eighth aspect, wherein: the external optical control signal comprises a carrier signal having a first frequency and noise; and
the single loop OEO is configured to oscillate in a frequency range that includes the first frequency so that the external optical control signal causes the output signal to oscillate at the first frequency and thereby causes the single loop OEO to extract the clock signal from the noise.

A twentieth aspect comprises the single loop OEO of the seventh aspect, further comprising a combining circuit operable to combine the electrical output with an electrical reference signal to produce a combined electrical control signal and to supply the combined electrical control signal to a control port to control the oscillation frequency of the output signal to implement a phase locked loop.

A twenty-first aspect comprises the single loop OEO of the twentieth aspect, wherein the electro-optical modulator further comprises an electrical bias port and the frequency at which the optical output signal oscillates is affected by a voltage applied to the bias port, and wherein the electrical bias port is the control port to which the combined electrical control signal is supplied.

A twenty-second aspect comprises the single loop OEO of the twentieth aspect, further comprising:

an optical fiber operable to receive the portion of the optical output signal and to transport it to the photodetector; and
a fiber stretcher coupled to the optical fiber, wherein the fiber stretcher includes an electrical input port and is operable to modify a length of the optical fiber in response to a signal applied to the electrical input port, and wherein the electrical input port is the control port to which the combined electrical control signal is supplied.

A twenty-third aspect comprises the single loop OEO of the twenty-first aspect, further comprising an electrical reference source operable to produce the electrical reference signal.

A twenty-fourth aspect comprises the single loop OEO of the twentieth aspect, further comprising:

a fiber delay line for producing a delayed version of the optical output signal of the electro-optical modulator; and
a second photodetector operable to convert the delayed version of the optical output signal to an electrical signal and to supply the electrical signal to the combining circuit as the electrical reference signal.

A twenty-fifth aspect comprises a data downlink system including the single loop OEO of the twentieth aspect, and further comprising:

a second electro-optical modulator operable to receive the optical output signal of the single loop OEO and to modulate the optical output signal using an electrical control signal from a downlink receiver to produce a modulated optical signal; and
a low speed photodetector operable to extract the electrical control signal from the modulated optical signal.

A twenty-sixth aspect comprises the single loop OEO of the first aspect, further comprising an RF coupler operable to receive the electrical signal produced by the photodetector, to combine an external electrical control signal with the electrical signal produced by the photodetector to produce a combined electrical signal, and to supply the combined electrical signal to the electrical input port of the electro-optical modulator as the electrical control signal.

The twenty-seventh aspect comprises the single loop OEO of the twenty-sixth aspect, further comprising:

a fiber delay line for producing a delayed version of the optical output signal of the electro-optical modulator; and
a second photodetector operable to convert the delayed version of the optical output signal to a delayed electrical signal and to supply the delayed electrical signal to the RF coupler as the external electrical control signal.

The twenty-eighth aspect comprises the single loop OEO of the twenty-seventh aspect, wherein a length of the fiber delay line is greater than one kilometre.

The twenty-ninth aspect comprises the single loop OEO of the first aspect, further comprising an optical coupler operable to combine an external optical control signal with the portion of the optical output signal to produce a combined optical signal, and wherein the photodetector is operable to convert the combined optical signal to an electrical signal and to supply the electrical signal to the electrical input port of the electro-optical modulator as the electrical control signal.

The thirtieth aspect comprises the single loop OEO of the first aspect, further comprising a laser source for supplying a laser signal to the electro-optical modulator, wherein the laser source, the electro-optical modulator and the photodetector are all implemented on a single integrated circuit substrate.

The thirty-first aspect comprises the single loop OEO of the first aspect, wherein the elements comprising a feedback loop comprise an optical delay line.

The thirty-second aspect comprises the single loop OEO of the first aspect, wherein the elements comprising a feedback loop comprise an RF delay line.

The thirty-third aspect comprises a method of generating an oscillatory optical signal comprising the steps of:

modulating an optical signal with an electrical control signal in an electro-optical modulator to produce a modulated optical output signal having a frequency related to the electrical control signal;
converting a portion of the modulated optical output signal to an electrical signal; and
supplying the electrical signal produced in the converting step to the electro-optical modulator as the electrical control signal.

A thirty-fourth aspect comprises a photonic modulator, comprising:

an oscillating modulator, having an input port for signals of a predetermined form, and having output port for signals of a second predetermined form, one of said first and second predetermined forms being an electrical oscillating signal and the other of said first and second predetermined forms being an optical oscillating signal;
a converter operable to convert said first predetermined form signal to said second predetermined form signal; and
an element operable to conduct said first predetermined form signal to said converter and to conduct said second predetermined form signal to said driving port, to form a feedback loop which uses both said electrical and optical signal and synchronizes to both.

A thirty-fifth aspect comprises a system as in the thirty-third aspect, further comprising optical and electrical injection ports, respectively allowing injection of optical and electrical injection signals, and to which said output signal is injection locked.

A thirty-sixth aspect comprises a system as in the thirty-fourth aspect further comprising an element operable to delay an output signal of said modulator by a time which is effective to lock said output to a past state.

A thirty-seventh aspect comprises a system as in the thirty-sixth aspect wherein said first predetermined output is optical, and wherein said element is a fiber delay line of at least 1 kilometre in length.

A thirty-eighth aspect comprises an opto-electrical system operating to generate electromagnetic oscillation, comprising:

an electro-optical modulator having an electrical input port and an optical output port, operating to generate an optical signal that is modulated at an oscillating frequency related to an electrical driving signal from said electrical input port;
a first feedback loop, operating to receive a first portion of said optical signal and to produce a first electrical feedback signal to said electrical input port with a first amount of delay;
a second feedback loop, operating to receive a second portion of said optical signal and to produce a second electrical feedback signal to said electrical input port with a second amount of delay; and
said first electrical feedback signal and said second electrical feedback signal operating cooperatively to affect said electrical driving signal.

A thirty-ninth aspect comprises a system as in the thirty-eighth aspect, further including a light source to produce light; said light being modulated by said electro-optical modulator to generate said optical signal.

A fortieth aspect comprises a system as in the thirty-ninth aspect, wherein said light source is a laser or a light-emitting diode.

A forty-first aspect comprises a system as in the fortieth aspect, wherein said laser is a diode laser, or a diode-pumped solid-state laser.

A forty-second aspect comprises a system as in the forty-first aspect, wherein said diode pumped solid-state laser is a diode-pumped YAG laser.

A forty-third aspect comprises a system as in the thirty-eighth aspect, wherein said electro-optical modulator further includes an electrical bias port, operating to receive an electrical biasing signal; said electrical biasing signal affecting operation of said electro-optical modulator and thereby changing said oscillating frequency in said optoelectrical system.

A forty-fourth aspect comprises system as in the thirty-eighth aspect, further comprising:

a first photodetector in said first feedback loop, operating to convert said first portion of said optical signal into said first electrical feedback signal; and

a second photodetector in said second feedback loop, operating to convert said second portion of said optical signal into said second electrical feedback signal.

A forty-fifth aspect comprises a system as in the forty-fourth aspect, wherein said first feedback loop further includes a first optical fiber therein to transport said first portion of said optical signal to said first photodetector.

A forty-sixth aspect comprises a system as in the forty-fifth aspect, further comprising:

an electrical signal combiner, operating to combine said first electrical feedback signal and said second electrical feedback signal to produce a third electrical feedback signal; and

said third electrical feedback signal being sent to said electrical input port of said electrooptical modulator to affect said electrical driving signal thereof.

A forty-seventh aspect comprises a system as in the forty-sixth aspect, further including an electrical signal amplifier, operating to receive and amplify an electrical feedback signal in said system.

A forty-eighth aspect comprises a system as in the forty-seventh aspect, further including an electrical signal filter, operating to affect spectral characteristic of said third electrical feedback signal and thereby to affect spectral characteristic of said optical signal produced by said electro-optical modulator.

A forty-ninth aspect comprises a system as in the forty-eighth aspect, further including a first variable optical delay device in said first optical fiber in said first feedback loop, operating to change length of said first optical fiber and thereby to change said first amount of delay of said first feedback loop.

A fiftieth aspect comprises a system as in the forty-ninth aspect, further including a variable electrical signal delay device, operating to add an amount of delay to said third electrical feedback signal.

A fifty-first aspect comprises a system as in the fiftieth aspect wherein said variable electrical signal delay device is a RF line-stretcher.

A fifty-second aspect comprises a system as in the forty-ninth aspect, further including a variable electrical signal delay device in said first feedback loop, being connected between said first photodetector and said electrical signal combiner and operating to add an additional delay to said first amount of delay of said first feedback loop.

A fifty-third aspect comprises a system as in the forty-ninth aspect, further including a variable electrical signal delay device in said second feedback loop, being connected between said second photodetector and said electrical signal combiner and operating to add an additional delay to said second amount of delay of said second feedback loop.

A fifty-fourth aspect comprises a system as in the forty-ninth aspect wherein said second feedback loop includes a second optical fiber to transport said second portion of said optical signal to said second photodetector.

A fifty-fifth aspect comprises a system as in the fifty-fourth aspect further including a second variable optical delay device in said second optical fiber in said second feedback loop, operating to change said second amount of delay of said second feedback loop.

A fifty-sixth aspect comprises a system as in the forty-seventh aspect, wherein said first amount of delay in said first feedback loop is substantially larger than said second amount of delay in said second feedback loop.

A fifty-seventh aspect comprises a system as in the forty-seventh aspect, wherein said first feedback loop and said second feedback loop have a combined open-loop gain that is greater than one.

The fifty-eighth aspect comprises a system as in the forty-fifth aspect, further including an optical coupler, operating to generate an optical output signal, and to inject an external optical signal into said system.

A fifty-ninth aspect comprises a system as in the forty-sixth aspect, further including an electrical signal coupler, operating to generate an electrical output signal, and to inject an external electrical signal into said system.

A sixtieth aspect comprises a system as in the thirty-eighth aspect, further including a third feedback loop, operating to receive a third portion of said optical signal and to produce an additional electrical feedback signal to said electrical input port with an amount of delay.

A sixty-first aspect comprises a system as in the forty-third aspect, wherein said electro-optical modulator performs light intensity modulation by phase modulation and is substantially similar to a Mach-Zehnder modulator.

A sixty-second aspect comprises a system as in the forty-third aspect, wherein said electro-optical modulator is an electro-absorption modulator.

A sixty-third aspect comprises a system as in the forty-third aspect, wherein said electro-optical modulator is selected from a group consisting of a directional coupler modulator, a light modulator using light polarization, and an acousto-optic modulator.

A sixty-fourth aspect comprises an opto-electrical system operating to generate electromagnetic oscillation, comprising:

an electro-optical modulator having an electrical input port, an optical output port, and an electrical output port, operating to generate an optical signal that is modulated at an oscillating frequency related to an electrical driving signal from said electrical input port;
a first optical feedback loop, operating to receive said optical signal and to produce a first electrical feedback signal to said electrical input port with a first amount of delay;
a second electrical feedback loop, operating to receive an electrical modulation signal related to said electrical driving signal from said electrical output port and to produce a second electrical feedback signal to said electrical input port with a second amount of delay; and
said first electrical feedback signal and said second electrical feedback signal operating collectively to affect said electrical driving signal.

A sixty-fifth aspect comprises a system as in the sixty-fourth aspect further including a photodetector in said first optical feedback loop, operating to convert said optical signal into said first electrical feedback signal.
A sixty-sixth aspect comprises a system as in the sixty-fifth aspect, wherein said first optical feedback loop further includes an optical fiber therein to transport said optical signal to said photodetector.
A sixty-seventh aspect comprises a system as in the sixty-sixth aspect, further comprising:

an electrical signal combiner, operating to combine said first electrical feedback signal and said second electrical feedback signal to produce a third electrical feedback signal; and
said third electrical feedback signal being sent to said electrical input port of said electrooptical modulator to affect said electrical driving signal thereof.

A sixty-eighth aspect comprises a system as in the sixty-fourth aspect, further including an electrical signal amplifier, operating to receive and amplify an electrical feedback signal in said system.
A sixty-ninth aspect comprises a system as in the sixty-seventh aspect, further including an electrical signal filter, operating to affect spectral characteristic of said third electrical feedback signal and thereby to affect spectral characteristic of said optical signal produced by said electro-optical modulator.
A seventieth aspect comprises a system as in the sixty-fourth aspect, further including a variable optical delay device, operating to change said first amount of delay of said first optical feedback loop.
A seventy-first aspect comprises a system as in the sixty-seventh aspect, further including a first variable electrical signal delay device, connecting between said electrical signal combiner and said electrical input port and operating to add a third amount of delay to said third electrical feedback signal.
A seventy-second aspect comprises a system as in the seventy-first aspect wherein said variable electrical signal delay device is a RF line-stretcher.
A seventy-third aspect comprises a system as in the seventy-first aspect, further including a second variable electrical signal delay device in said first optical feedback loop, connecting between said photodetector and said electrical signal combiner and operating to add an additional delay to said first amount of delay of said first optical feedback loop.
A seventy-fourth aspect comprises a system as in the seventy-first aspect, further including a third variable electrical signal delay device in said second electrical feedback loop, connecting between said electrical output port and said electrical signal combiner and operating to add an additional delay to said second amount of delay of said second electrical feedback loop.
A seventy-fifth aspect comprises a system as in the sixy-eighth aspect, further including an electrical signal coupler connected between said photodetector and said electrical signal combiner in said first optical feedback loop, operating to partition a portion of said first electrical feedback signal as an electrical output signal, and/or to inject an external electrical signal into said first electrical feedback signal.
A seventy-sixth aspect comprises a system as in the sixty-eighth aspect, further including an electrical signal coupler in said second electrical feedback loop, operating to partition a portion of said second electrical feedback signal as an electrical output signal, and/or to inject an external electrical signal into said second electrical feedback signal.
A seventy-seventh aspect comprises a system as in the sixty-eighth aspect, further including an electrical signal coupler connected between said electrical signal combiner and said electrical input port, operating to partition a portion of said third electrical feedback signal as an electrical output signal, and/or to inject an external electrical signal into said third electrical feedback signal.
A seventy-eighth aspect comprises a system as in the sixty-eighth aspect, wherein said first amount of delay in said first optical feedback loop is substantially larger than said second amount of delay in said second electrical feedback loop.

A seventy-ninth aspect comprises a system as in the sixty-eighth aspect, wherein said first optical feedback loop and said second electrical feedback loop have a combined open-loop gain that is greater than one.

An eightieth aspect comprises an opto-electrical system for generating electromagnetic oscillation, comprising:

a light source having an electrical input port, operating to produce light that is modulated at an oscillating frequency related to an electrical driving signal applied at said electrical input port;
a first feedback loop, operating to receive a first portion of said optical signal and to produce a first electrical feedback signal to said electrical input port with a first amount of delay;
a second feedback loop, operating to receive a second portion of said optical signal and to produce a second electrical feedback signal to said electrical input port with a second amount of delay; and
said first electrical feedback signal and said second electrical feedback signal operating collectively to affect said electrical driving signal.

An eighty-first aspect comprises a system as in the eightieth aspect, wherein said light source is a laser or a light-emitting diode.

An eighty-second aspect comprises a system as in the eighty-first aspect, wherein said laser is a diode laser, or a diode-pumped solid-state laser.

An eighty-third aspect comprises a system as in the eighty-second aspect, wherein said laser is a distributed feedback diode laser.

An eighty-fourth aspect comprises a system as in the eightieth aspect, further comprising:

a first photodetector in said first feedback loop, operating to convert said first portion of said optical signal into said first electrical feedback signal; and
a second photodetector in said second feedback loop, operating to convert said second portion of said optical signal into said second electrical feedback signal.

An eighty-fifth aspect comprises a system as in the eighty-fourth aspect, wherein said first feedback loop further includes a first optical fiber therein to transport said first portion of said optical signal to said first photodetector.

An eighty-sixth aspect comprises a system as in the eighty-fifth aspect, further comprising:

an electrical signal combiner, operating to combine said first electrical feedback signal and said second electrical feedback signal to produce a third electrical feedback signal; and
said third electrical feedback signal being sent to said electrical input port of said light source to affect said electrical driving signal.

An eighty-seventh aspect comprises a system as in the eighty-sixth aspect, further including an electrical signal amplifier, operating to receive and amplify an electrical signal in said system.

An eighty-eighth aspect comprises a system as in the eighty-sixth aspect, further including an electrical signal filter, operating to affect spectral characteristic of said third electrical feedback signal and thereby to affect said oscillating frequency.

An eighty-ninth aspect comprises a system as in the eighty-eighth aspect, further including a first variable optical delay device, operating to change said first amount of delay of said first feedback loop.

A ninetieth aspect comprises a photonic method for generating radio frequency signals, comprising:

modulating light at an oscillating frequency with a controlling signal; said oscillating frequency having a relationship with said controlling signal; producing a first feedback signal with a first amount of delay by using one of said light and said controlling signal in a first way;
producing a second feedback signal with a second amount of delay by using one of said light or said controlling signal in a second way; changing said controlling signal with both said first feedback signal and said second feedback signal to further modulate said light; and
thereby generating radio frequency oscillations in said controlling signal and in said light.

A ninety-first aspect comprises a method as in the ninetieth aspect, further including:

partitioning a portion of said light to produce said first feedback signal; and
using an optical delay element to produce at least a part of said first amount of delay.

A ninety-second aspect comprises a method as in the ninety-first aspect, further including:

making said first feedback signal have a certain relationship with said second feedback signal.

A ninety-third aspect comprises a method as in the ninety second aspect, wherein said certain relationship is a phase relationship.

A niney-fourth aspect comprises a method as in the ninety-first aspect, further including making said first amount of delay substantially larger than said second amount of delay.

A ninety-fifth aspect comprises a method as in the ninety-fourth aspect, wherein said optical delay element is an optical fiber.

A ninety-sixth aspect comprises a method as in the ninety-fifth aspect, further including:

partitioning another portion of said light to produce said second feedback signal; and
using another optical delay element to produce at least a part of said second amount of delay.

A ninety-seventh aspect comprises a method as in the ninety-sixth aspect, wherein said another optical delay element is another optical fiber.

A ninety-eighth aspect comprises a method as in the ninety-sixth aspect, further including:

taking a portion of controlling signal to produce said second feedback signal; and
using an electrical signal delay element to produce at least a part of said second amount of delay.

A ninety-ninth aspect comprises a method as in the ninety-second aspect, further including amplifying said first feedback signal and said second feedback signal and making a total open-loop gain of said first feedback signal and said second feedback signal exceed one.

A hundredth aspect comprises an opto-electrical system for generating electromagnetic oscillation, comprising:

a light source having an electrical input port, operating to produce light that is modulated at an oscillating frequency related to an electrical driving signal applied at said electrical input port;
a first feedback loop, operating to receive said optical signal and to produce a first electrical feedback signal to said electrical input port with a first amount of delay;
a second feedback loop, operating to receive an electrical modulation signal related to said electrical driving signal and to produce a second electrical feedback signal to said electrical input port with a second amount of delay; and
said first electrical feedback signal and said second electrical feedback signal operating collectively to affect said electrical driving signal.

A one hundred and first aspect comprises a system as in the hundredth aspect, wherein said light source is a laser or a light-emitting diode.

A one hundred and second aspect comprises a system as in the one hundred and first aspect, wherein said laser is a diode laser, or a diode-pumped solid-state laser.

A one hundred and third aspect comprises a system as in the one hundred and second aspect, wherein said laser is a distributed feedback diode laser.

A one hundred and fourth aspect comprises a system as in the one hundredth aspect, further comprising a photodetector in said first feedback loop, operating to convert said optical signal into said first electrical feedback signal.

A one hundred and fifth aspect comprises a system as in the one hundred and fourth aspect, wherein said first feedback loop further includes a first optical fiber therein to transport said optical signal to said photodetector.

A one hundred and sixth aspect comprises a system as in the one hundred and firth aspect, further comprising:

an electrical signal combiner, operating to combine said first electrical feedback signal and said second electrical feedback signal to produce a third electrical feedback signal; and
said third electrical feedback signal being sent to said electrical input port of said light source to affect said electrical driving signal.

A one hundred and seventh aspect comprises a system as in the one hundred and sixth aspect, further including an electrical signal amplifier, operating to receive and amplify an electrical signal in said system.

A one hundred and eighth aspect comprises a system as in the one hundred and sixth aspect, further including an electrical signal filter, operating to affect spectral characteristic of said third electrical feedback signal and thereby to affect said oscillating frequency.

A one hundred and ninth aspect comprises a system as in the one hundred and eighth aspect, further including a variable optical delay device, operating to change said first amount of delay of said first feedback loop.

A one hundred and tenth aspect comprises a system as in the one hundred and ninth aspect wherein said variable optical delay device is a fiber stretcher.

A one hundred and eleventh aspect comprises a system as in the forty-fourth aspect, wherein said first feedback loop has a first open-loop gain that is less than one, said second feedback loop has a second open loop gain that is less than one, but a total open-loop gain of said system is greater than one; said system being capable of sustaining said electromagnetic oscillation therein in absence of a signal amplification device therein.

A one hundred and twelfth aspect comprises a system as in the eighty-fourth aspect, wherein said first feedback loop has a first open-loop gain that is less than one, said second feedback loop has a second open loop gain that is less than one, but a total open-loop gain of said system is greater than one; said system being capable of sustaining said electromagnetic oscillation therein in absence of a signal amplification device therein.

A one hundred and thirteenth aspect comprises a method as in the ninetieth aspect, further including:

> making said first feedback signal have a first open-loop gain to be smaller than one;
> making said second feedback signal have a second open-loop gain to be smaller than one;
> making a total open-loop gain to be greater than one; and

thereby sustaining an oscillation in said controlling signal and said light.

**Claims**

1. A system comprising:

   > an electro-optical modulator (12) having an electrical input port (24) that accepts an electrical control signal, an electrical bias port (26) to receive an electrical bias, and an optical output port (32), the electro-optical modulator operable to generate at the optical output port an optical signal that oscillates at a frequency related to the electrical control signal;
   > a feedback loop (14 - 24) coupled to receive at least a portion of the optical signal and to supply the electrical control signal to the electrical input port (24) as a positive feedback with a total open loop gain greater than one, wherein the feedback loop is operable to generate the electrical control signal from the received portion of the optical signal and comprises:
   >
   > > an optical delay element (35) coupled to receive the portion of the optical signal,
   > > a photodetector (16) operable to convert the delayed optical signal from the optical delay element (35) into an electrical detector signal, and
   > > an electrical part (18 - 22) to produce the electrical control signal from the electrical detector signal;
   > > a signal coupler (20) coupled to the electrical part (18 - 22) of the feedback loop and to split a portion of the electrical control signal as an electrical output (34);
   > > a loop length adjustment element (38) coupled to the feedback loop (14 - 24) and operable to adjust a length of the feedback loop in response to a loop control signal; and
   > > a phase locked loop (34, 36, 84 - 88) to produce the loop control signal from a reference electrical signal (84) oscillating at a reference frequency and the electrical output (34) and to supply the loop control signal to either one of the loop length adjustment element (36, 38) and the electrical bias port (26).

   [basis: figs 1, 7; page 11, line 10 *et seq* and page 25, lines 5 to 12]

2. The system as in claim 1 wherein the phase locked loop comprises:

   > a summing junction (86) to add the reference electrical signal (84) and the electrical output (34) as an electrical feedback signal; and
   > a loop filter (88) to filter the electrical feedback signal as the loop control signal.

   [basis: fig. 7; page 25, lines 5 to 12]

3. The system as in claim 1 wherein the optical delay element comprises an optical fiber delay line (35).

[basis: fig. 1]

4. The system as in claim 3 wherein the loop length adjustment element comprises a fiber stretcher (38) coupled to the optical fiber delay line (35), wherein the fiber stretcher comprises an electrical input port (36) to receive the loop control signal and is operable to modify a length of the optical fiber delay line in response to the loop control signal.
[basis: fig. 1; page 12, lines 11 to 16]

5. A method of using an optoelectronic oscillator OEO as a voltage-controlled oscillator, the method comprising:

using a phase locked loop (34, 36, 84 - 88) to produce a loop control signal (84) from an electrical output (34) of the OEO and a reference electrical signal oscillating at a reference frequency;
supplying the loop control signal to either of a loop length adjustment element (36, 38) or an electrical bias port (26) of the OEO; and
adjusting a length of a feedback loop of the OEO in response to the loop control signal.

[basis: see claim 1 above]

6. The method of claim 5 wherein using the phase locked loop comprises:

summing (86) the reference electrical signal (84) and the electrical output (34) to obtain an electrical feedback signal; and
filtering (88) the electrical feedback signal to obtain the loop control signal.

[basis: see claim 2 above]

7. The method of claim 5 or claim 6 wherein the adjusting step comprises:

supplying the loop control signal to an electrical input port (36) of a fiber stretcher (38), the fiber stretcher being coupled to an optical fiber delay line (35); and
operating the fiber stretcher (38) to modify a length of the optical fiber delay line (35) in response to the loop control signal.

[basis: see claim 4 above]

8. A system comprising:

an electro-optical modulator (12) having an electrical input port (24) that accepts an electrical control signal, an electrical bias port (26) to receive an electrical bias, and an optical output port (32), the electro-optical modulator operable to generate at the optical output port an optical signal that oscillates at a frequency related to the electrical control signal;
a feedback loop (14 - 24) coupled to receive at least a portion of the optical signal and to supply the electrical control signal to the electrical input port (24) as a positive feedback with a total open loop gain greater than one, wherein the feedback loop is operable to generate the electrical control signal from the received portion of the optical signal and comprises:

an optical delay element (35) coupled to receive the portion of the optical signal and to output a delayed optical signal,
a photodetector (16) operable to convert the delayed optical signal from the optical delay element (35) into an electrical detector signal, and
an electrical part (18 - 22) to produce the electrical control signal from the electrical detector signal;
a signal coupler (20) coupled to the electrical part (18 - 22) of the feedback loop and to split a portion of the electrical control signal as an electrical output;
a loop length adjustment element (38) coupled to the feedback loop (14 - 24) and operable to adjust a length of the feedback loop in response to a loop control signal;
a second optical delay element (70, 90) coupled to receive a portion of light output from the electro-optical modulator (12) and to output a second delayed optical signal;
a second photodetector (92) to receive a portion of the second delayed optical signal to produce a second detector output;

a phase locked loop (94, 98) to produce the loop control signal from the second detector output and the electrical output (34) and to supply the loop control signal to either one of the loop length adjustment element (36) and the electrical bias port (26);

a second electro-optical modulator (98) to receive and modulate the second delayed optical signal ($f_0$) to produce a modulated optical signal in response to a downlink (100) signal carrying a baseband signal (IF) on a carrier at the frequency of the oscillation carried in the second delayed optical signal; and

a third photodetector (104) coupled to receive the modulated optical signal ($f_0$+IF) to recover the baseband signal.

[basis: fig. 8; page 26, line 23 to page 27, line 2]

9. A method of using an optoelectronic oscillator OEO to perform up/down conversion, the method comprising:

delaying a portion of light output from the OEO to obtain a delayed optical signal;

photodetecting the delayed optical signal to produce a detector output;

using a phase locked loop (94, 88) to produce a loop control signal from the detector output and an electrical output of the OEO;

supplying the loop control signal to either of a loop length adjustment element (38) or an electrical bias port (26) of the OEO;

supplying the delayed optical signal to an electro-optical modulator (98) and producing a modulated optical signal in response to a downlink (100) signal carrying a baseband signal (IF) on a carrier at the frequency of the oscillation carried in the delayed optical signal; and

photodetecting the modulated optical signal to recover the baseband signal.

[basis: see claim 8 above]

10. A system comprising:

a remote reference signal source (108) to produce a reference signal (107) at a reference frequency;

a laser (106) driven by the reference signal (107) to produce an optical beam (109) carrying the reference signal;

means (110) for transmitting the optical beam from the laser;

an electro-optical device (10) that receives the transmitted optical beam and operates to produce an electrical output (34) carrying the reference signal and a plurality of optical outputs (32) each carrying the reference signal, the device comprising:

an electro-optical modulator (12) having an electrical input port (24) that accepts an electrical control signal, and an optical output port (32), the electro-optical modulator operable to generate at the optical output port an optical signal that oscillates at a frequency related to the electrical control signal;

a feedback loop (14 - 24) coupled to receive at least a portion of the optical signal and to supply the electrical control signal to the electrical input port (24) as a positive feedback with a total open loop gain greater than one, wherein the feedback loop is operable to generate the electrical control signal from the received portion of the optical signal and comprises:

an optical delay element (35) coupled to receive the portion of the optical signal and to output a delayed optical signal,

a photodetector (16) operable to convert the delayed optical signal from the optical delay element (35) into an electrical detector signal, and

an electrical part (18 - 22) to produce the electrical control signal from the electrical detector signal;

a signal coupler (20) coupled to the electrical part (18 - 22) of the feedback loop and to split a portion of the electrical control signal as the electrical output (34); and

an optical coupler (28) coupled to the feedback loop to inject the transmitted optical beam into the feedback loop (14 - 24) to cause the feedback loop to oscillate at the reference frequency.

[basis: fig. 9; page 27, lines 3 to 18]

11. A method of using an optoelectronic oscillator OEO to perform high frequency RF carrier regeneration, amplification, and distribution, the method comprising:

using a reference signal source (108) to produce a reference signal (107) at a reference frequency;
driving a laser (106) by the reference signal to produce an optical beam (109) carrying the reference signal;
transmitting the optical beam from the laser to an optical input of the OEO;
operating the OEO to produce an electrical output (34) carrying the reference signal and a plurality of optical outputs (32) each carrying the reference signal.

[basis: see claim 10 above]

**12.** A system comprising:

an electro-optical oscillator (10) that receives an electrical injection signal (112) at an injection frequency ($f_0$) and operates to produce an electrical output (34) at an oscillation frequency that is a harmonic of the injection frequency and an optical signal (32) carrying the electrical output, the device comprising:

an electro-optical modulator (12) having an electrical input port (24) that accepts an electrical control signal, and an optical output port (32), the electro-optical modulator configured in a nonlinear mode and operable to generate at the optical output port the optical signal;
a feedback loop (14 - 24) coupled to receive at least a portion of the optical signal and to supply the electrical control signal to the electrical input port (24) as a positive feedback with a total open loop gain greater than one, wherein the feedback loop is operable to generate the electrical control signal from the received portion of the optical signal and comprises:

an optical delay element (35) coupled to receive the portion of the optical signal and to output a delayed optical signal,
a photodetector (16) operable to convert the delayed optical signal from the optical delay element (35) into an electrical detector signal, and
an electrical part (18 - 22) to produce the electrical control signal from the electrical detector signal; and
a signal coupler (20) coupled to the electrical part (18 - 22) of the feedback loop and to split a portion of the electrical control signal as the electrical output (34) and to inject the electrical injection signal into the feedback loop.

[basis: fig. 10A; page 27, lines 19 to 35]

**13.** A method of using an optoelectronic oscillator OEO for high gain frequency multiplication, the method comprising
supplying an electrical injection signal (112) at an injection frequency ($f_0$) to an electrical input port (30) of the OEO (10);
operating the OEO in a nonlinear mode to produce an electrical output at an oscillation frequency that is a harmonic of the injection frequency and an optical signal carrying the electrical signal.
[basis: see claim 12 above]

**14.** A system comprising:

a reference signal source (116) to produce a reference signal at a reference frequency (fo);
a laser (114) driven by the reference signal (116) in a nonlinear mode to produce an optical beam carrying signals at the reference frequency ($f_0$) and a plurality of harmonic frequencies ($2f_0 ... nf_0$) of the reference frequency;
an electro-optical oscillator (10) that receives the optical beam and operates to produce an electrical output (34) at or near a selected harmonic frequency ($nf_0$) of the reference frequency and an optical signal (32) carrying the electrical output, the oscillator comprising:

an electro-optical modulator (12) having an electrical input port (24) that accepts an electrical control signal, and an optical output port (32), the electro-optical modulator configured in a nonlinear mode and operable to generate at the optical output port the optical signal;
a feedback loop (14 - 24) coupled to receive at least a portion of the optical signal and to supply the electrical control signal to the electrical input port (24) as a positive feedback with a total open loop gain greater than one, wherein the feedback loop is operable to generate the electrical control signal from the received portion of the optical signal and comprises:

an optical delay element (35) coupled to receive the portion of the optical signal and to output a delayed optical signal,
a photodetector (16) operable to convert the delayed optical signal from the optical delay element (35) into an electrical detector signal, and
an electrical part (18 - 22) to produce the electrical control signal from the electrical detector signal; and
an optical coupler (28) coupled to the feedback loop and to inject the optical beam into the feedback loop to lock the oscillator at the selected harmonic frequency.

[basis: fig. 10B; page 28, lines 1 to 15]

**15.** A method of using an optoelectronic oscillator OEO for high gain frequency multiplication, the method comprising:

using a reference signal source (116) to produce a reference signal at a reference frequency ($f_0$);
driving a laser (114) by the reference signal in a nonlinear mode to produce an optical beam carrying signals at the reference frequency ($f_0$) and a plurality of harmonic frequencies ($2f_0 ... nf_0$) of the reference frequency;
supplying the optical beam from the laser to an optical input (28) of the OEO; and
operating the OEO (10) in a nonlinear mode to produce an electrical output (34) at or near a selected harmonic frequency ($nf_0$) of the reference frequency and an optical signal (32) carrying the electrical output.

[basis: see claim 14 above]

**16.** A system comprising:

an electro-optical modulator (12) having an electrical input port (24) that accepts an electrical control signal, and an optical output port (32), the electro-optical modulator operable to generate at the optical output port an optical signal that oscillates at a frequency related to the electrical control signal;
a feedback loop (14 - 24) coupled to receive at least a portion of the optical signal and to supply the electrical control signal to the electrical input port as a positive feedback with a total open loop gain greater than one to generate oscillations at a higher frequency (128) and a lower frequency (126), wherein the feedback loop is operable to generate the electrical control signal from the received portion of the optical signal and comprises:

an optical delay element (35) coupled to receive the portion of the optical signal,
a photodetector (16) operable to convert the delayed optical signal from the optical delay element (35) into an electrical detector signal, and
an electrical part (18 - 22) to produce the electrical control signal from the electrical detector signal;
a signal coupler (20) coupled to the electrical part (18 - 22) of the feedback loop and to split a portion of the electrical control signal as an electrical output (34);
a loop length adjustment element (38) coupled to the feedback loop (14 - 24) and operable to adjust a length of the feedback loop in response to a loop control signal;
a low pass filter (130) to filter a low frequency portion of the electrical output as a first signal; and
a signal mixer (134) to combine the first signal and a reference electrical signal (136) oscillating at the lower frequency as the loop control signal to stabilize the length of the feedback loop.

[basis: fig. 12; page 29, lines 1 to 30]

**17.** A method of using an optoelectronic oscillator OEO for frequency stabilisation, the method comprising:

low-pass filtering (130) an electrical output (34) of the OEO (124) to obtain a first signal;
mixing (134) the first signal with a reference electrical signal (136) oscillating at a lower frequency to obtain a loop control signal;
supplying the loop control signal to a loop length adjustment element (36) of the OEO;
operating the loop length adjustment element to adjust a length of a feedback loop (14 - 24) of the OEO in response to the loop control signal, to stabilise the length of the feedback loop;
generating oscillations in the feedback loop at the lower frequency (126) and a higher frequency (128).

[basis: see claim 16 above]

**18.** A method comprising:

tuning an electro-optical oscillator (10) to oscillate at or near a clock rate (R), wherein the oscillator comprises an electro-optical modulator (12) having an electrical input port (24) that accepts an electrical control signal, an electrical bias port (26) to receive an electrical bias, and an optical output port (32), the electro-optical modulator operable to generate at the optical output port an optical signal, a feedback loop (14 - 24) coupled to receive at least a portion of the optical signal and to supply the electrical control signal to the electrical input port as a positive feedback with a total open loop gain greater than one, the feedback loop operable to generate the electrical control signal from the received portion of the optical signal and comprising an optical delay element (35) coupled to receive the portion of the optical signal, a photodetector (16) operable to convert the delayed optical signal from the optical delay element into an electrical detector signal, and an electrical part (18 - 22) to produce the electrical control signal from the electrical detector signal;

injecting an input signal (138, 142) having a clocked signal at the clock rate (R) embedded in other signal components into the electro-optical oscillator (10) to lock the oscillator at the clock rate to selectively amplify the clocked signal while rejecting other signal components in the input signal; and

coupling a signal (140) out of the feedback loop of the oscillator to recover the clocked signal at the clock rate without other signal components.

[basis: figs. 14A and 14B; page 29, line 31 to page 31, line 5]

**19.** The method as in claim 18 wherein the input signal is an input RF signal carrying the clocked signal where the clock rate is a range up to 70 GHz.
[basis: page 30, lines 14 - 18]

**20.** The method as in claim 18 wherein the input signal is an input optical signal carrying the clocked signal where the clock rate is a range up to 70 GHz.
[basis: page 30, lines 14 - 18]

**21.** The method as in claim 18 wherein the input signal (30, 144) is an optical signal carrying the clocked signal and input data, and the method further comprising:

splitting a portion of the input optical signal (144) into a second optical signal;

directing the second optical signal through a synchronizing optical delay line (146) to cause a delay sufficiently long for the oscillator to lock to the clock rate;

converting (148) the delayed second optical signal into an electrical data signal; and

using a data recovery circuit (150) to process the electrical data signal and the clock signal recovered from the oscillator to recover the input data initially carried by the input optical signal.

[basis: fig. 15; page 31, lines 6 to 27]

**22.** A system comprising:

an input optical splitter to split an input optical signal (144) carrying a clocked signal at a clock rate (R) and input data into a first optical signal and second optical signal;

an electro-optical oscillator (10) operable to oscillate at or near the clock rate (R) to receive the first optical signal, wherein the oscillator comprises an electro-optical modulator (12) having an electrical input port (24) that accepts an electrical control signal, an electrical bias port (26) to receive an electrical bias, and an optical output port (32), the electro-optical modulator operable to generate at the optical output port an optical signal, a feedback loop (14 - 24) coupled to receive at least a portion of the optical signal and to supply the electrical control signal to the electrical input port as a positive feedback with a total open loop gain greater than one, the feedback loop operable to generate the electrical control signal from the received portion of the optical signal and comprising an optical delay element (35) coupled to receive the portion of the optical signal, a photodetector (16) operable to convert the delayed optical signal from the optical delay element into an electrical detector signal, and an electrical part (18 - 22) to produce the electrical control signal from the electrical detector signal, wherein the oscillator further comprises an optical coupler (28) to inject the first optical signal into the feedback loop to lock the oscillator at the clock rate and a signal coupler coupled to the electrical part to output an electrical output signal as the recovered clocked signal;

a synchronizing optical delay line (146) coupled to receive the second optical signal and to cause a delay sufficiently long for the oscillator to lock to the clock rate;

an optical-to-electrical converter (148) to convert the delayed second optical signal into an electrical data signal; and

a data recovery circuit (150) to process the electrical data signal and the clock signal (34) recovered from the oscillator to recover the input data initially carried by the input optical signal (144).

[basis: fig. 15; page 31, lines 6 to 27]

FIG.1A

FIG.1B

EP 1 600 806 A2

FIG.2A

FIG.2B

FIG.3A

FIG.3B

FIG.4A

FIG.4B

FIG.4C

FIG.4D

FIG.4E

EP 1 600 806 A2

FIG.5A

FIG.5B

10

30

ELECTRICAL OUTPUT

PHOTONIC OSCILLATOR

32 ELECTRICAL OUTPUT

76 ELECTRICAL INJECTION

PHOTODETECTOR

OPTICAL OUTPUT

74 LONG FIBER DELAY

FIG.6A

FIG.6B

POWER (dBm)

0

-20

-40

-60

FREE-RUNNING

82

78

78

SELF-INJECTION
LOCKED

80

78

78

INJECTION LEVEL:
-20 dBm

100.010    100.015    100.020    100.025x10$^6$

FREQUENCY (Hz)

FIG.7A

FIG.7B

100

$f_O + IF$

98

E/O MODULATOR

96

102

OPTICAL LO $f_O$

LOW SPEED PHOTODETECTOR

104

IF

92

94

90

STABILIZED PHOTONIC OSCILLATOR

88

LOOP FILTER

PHOTONIC OSCILLATOR

10

FIG.8

FIG.9

EP 1 600 806 A2

EP 1 600 806 A2

112      30                34      STABLE OUTPUT AT $3f_0$

ELECTRICAL INJECTION
AT $f_0$

PHOTONIC OSCILLATOR
AT $3f_0$

ELECTRICAL

OPTICAL

32

10

## FIG.10A

STRONG REFERENCE AT $f_0$

116

114

OPTICAL
INJECTION

$f_0, 2f_0, 3f_0, ... nf_0$

28

PHOTONIC OSCILLATOR
AT $nf_0$

34      STABLE OUTPUT AT $nf_0$

ELECTRICAL

OPTICAL

32

10

## FIG.10B

FIG. 11A

FIG. 11B

FIG.12

FIG.13A

FIG.13B

FIG.14A

FIG.14B

FIG.15

FIG.2X

FIG. 3Xa

FIG. 3Xb

FIG. 3Xc

FIG. 4X

FIG. 5Xa

FIG. 5Xb

FIG. 5Xc

FIG.6Xa

FIG. 6Xb

EP 1 600 806 A2

FIG. 7X

FIG. 8Xa

FIG. 8Xb

FIG. 8Xc

FIG. 8Xd

FIG. 8Xe

EP 1 600 806 A2

900

918    919

916    loop 2-electrical

906

910    φ    907

908

loop 1-fiber

904

# FIG. 9X

1000    fiber coupler    1002

1004

diode laser

1006

loop1
(1 km fiber)

loop 2
(few meter of fiber)

RF filter

Detector1

1016

1008

1014    1012

RF power
combiner

Detector2    1010

FIG.11Xa

FIG.11Xb

DIRECTIONAL COUPLER
MODULATOR

LIGHT SOURCE

AMP.

LOOP1

LOOP2

RF COUPLER

PHOTODIODES

FIBER DELAYS

FIG.12Xa

DFB LASER INTEGRATED WITH AN
ELECTRO-ABSORPTION MODULATOR

OPTICAL COUPLER

AMP.

LOOP2  LOOP1

RF COUPLER

PHOTODIODES

FIBER DELAYS

FIG. 12Xb

EP 1 600 806 A2

FIG. 12Xc

FIG. 12Xd

EP 1 600 806 A2